(19) Europäisches Patentamt
European Patent Office
Office européen des brevets

(11) **EP 1 941 547 B1**

(12) **FASCICULE DE BREVET EUROPEEN**

(45) Date de publication et mention de la délivrance du brevet:
**30.09.2009 Bulletin 2009/40**

(21) Numéro de dépôt: **06807511.8**

(22) Date de dépôt: **24.10.2006**

(51) Int Cl.:
***H01L 27/26*** *(2006.01)*   ***H04B 7/06*** *(2006.01)*

(86) Numéro de dépôt international:
**PCT/EP2006/067716**

(87) Numéro de publication internationale:
**WO 2007/048790 (03.05.2007 Gazette 2007/18)**

(54) **Procédé de transmission d'un signal multiporteuse conçu pour limiter l'interférence, signal, dispositif d'émission, procédé et dispositif de réception, et programmes d'ordinateur correspondants**

Verfahren zum Senden eines Mehrträgersignals, das für die Begrenzung von störungen ausgelegt ist, Signal, Emssionseinrichtung, Empfangsverfahren und Einrichtung und entsprechende Computerprogramme

Method for transmitting a multi-carrier signal designed for limiting interference, signal, emitting device, receiving method and device, and corresponding computer programs

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **26.10.2005 FR 0510964**

(43) Date de publication de la demande:
**09.07.2008 Bulletin 2008/28**

(73) Titulaire: **FRANCE TELECOM**
**75015 Paris (FR)**

(72) Inventeur: **JAVAUDIN, Jean-Philippe**
**F-92794 Issy les Moulineaux Cedex 9 (FR)**

(74) Mandataire: **Bioret, Ludovic**
**Cabinet Vidon**
**16 B, rue de Jouanet - B.P. 90333**
**35703 Rennes Cedex 07 (FR)**

(56) Documents cités:
**FR-A- 2 814 302**     **FR-A- 2 814 303**

**Description**

**1. Domaine de l'invention**

Le domaine de l'invention est celui de la transmission et de la diffusion d'informations numériques, notamment à haut débit, sur une bande de fréquence limitée.

Plus précisément, l'invention concerne une technique de transmission d'un signal à porteuses multiples permettant de réduire, en réception, l'interférence entre symboles affectant les signaux multiporteuses, sans nécessiter l'introduction d'un intervalle de garde (encore appelé préfixe cyclique).

Ainsi, la technique selon l'invention est notamment bien adaptée à la transmission de signaux à porteuses multiples ayant subi une modulation de type OFDM/OQAM (en anglais "Orthogonal Frequency Division Multiplexing / Offset Quadrature Amplitude Modulation"), pour laquelle les porteuses sont mises en forme par la fonction prototype Iota. On rappelle que la fonction prototype Iota, décrite par exemple dans le document de brevet n° FR 2 733 869, a pour caractéristique d'être identique à sa transformée de Fourier. L'invention s'applique bien sûr également à tout autre type de modulation multiporteuse, notamment de type OFDM/OQAM, quelle que soit la fonction prototype associée.

L'invention trouve notamment des applications dans un contexte radiomobile, et permet de combattre les problèmes liés à l'interférence entre symboles et à l'effet Doppler.

L'invention s'applique notamment, mais non exclusivement, dans le cadre d'un système multi-antennes de type MISO ou MIMO (de l'anglais « Multiple Input Single Output » ou « Multiple Input Multiple Output » pour « Entrées Multiples Sortie Unique » ou « Entrées Multiples Sorties Multiples »), mettant en oeuvre au moins deux antennes à l'émission.

**2. Art antérieur**

Pour combattre les problèmes liés à l'interférence entre symboles (IES) et à l'effet Doppler, il est bien connu d'ajouter un intervalle de garde, pendant lequel on ne transmet pas d'informations.

Un inconvénient majeur de cette technique est qu'elle est d'efficacité spectrale réduite, puisque aucune information utile n'est transmise pendant la durée de cet intervalle. On cherche donc une technique permettant de réduire l'IES affectant les signaux à porteuses multiples sans introduire d'intervalle de garde.

Il a été proposé, dans le document de brevet français FR 2 814 302 déposé au nom du même Demandeur, une technique de construction d'un signal multiporteuse, par exemple de type OFDM/OQAM, ne nécessitant pas l'introduction d'un intervalle de garde, et permettant de limiter l'interférence affectant les pilotes. On rappelle notamment que la modulation OFDM/OQAM (Offset QAM) est une alternative à la modulation OFDM classique, qui contrairement à la modulation OFDM, ne requiert pas d'intervalle de garde.

Selon cette technique, le signal à porteuses multiples, comprenant des pilotes et des éléments de données informatifs, est construit en figeant la valeur d'au moins un des éléments de données informatifs sur une couronne comprenant les porteuses directement voisines d'un pilote, de façon à réduire, en réception, l'interférence affectant ce pilote.

En effet, les inventeurs ont constaté que l'interférence intrinsèque affectant les porteuses de référence du plan temps-fréquence, appelées pilotes, dépendait principalement des porteuses directement voisines de chacun des pilotes.

Ainsi, et comme détaillé en annexe 1 ci-dessous l'interférence $C^1_{m_0,n_0}$ due aux huit porteuses formant une couronne entourant un pilote, dite « première couronne » dans le document de brevet FR 2 814 302, peut s'écrire:

$$C^1_{m_0,n_0} = \sum_{(m,n)\in\Omega^1_{m_0,n_0}} a_{m,n} \int_{\Re} g_{m,n}(t) g^*_{m_0,n_0}(t)dt$$

avec :

- $a_{m,n}$ les symboles réels envoyés sur le $m^{ième}$ sous porteuse au $n^{ième}$ temps symbole ;

- $\Omega^1_{m_0,n_0}$ des indices des porteuses voisines d'un pilote ;

- $g_{m,n}(t)$ les versions décalées en temps et en fréquence de la fonction prototype $g(t)$.

Les inventeurs ont donc cherché à annuler l'interférence intrinsèque due au moins à la première couronne sur certaines porteuses de référence du plan temps-fréquence, notamment pour un signal multiporteuse du type OFDM/OQAM.

Selon la technique présentée dans ce document, une relation entre les porteuses de la première couronne entourant un pilote est introduite pour éliminer localement (et presque totalement) cette interférence intrinsèque, et permettre une estimation correcte du canal de propagation.

Autrement dit, ce document propose une technique de réduction des phénomènes d'interférence, mettant en oeuvre une modulation multiporteuse à pilotes répartis, consistant à imposer une ou plusieurs contrainte(s) sur la valeur d'un ou plusieurs éléments de données informatifs que l'on souhaite transmettre, de manière à réduire l'IES néfaste à la mise en oeuvre d'une estimation de canal correcte.

Ainsi, on annule l'interférence affectant un pilote donné, due aux porteuses appartenant à la première couronne entourant ce pilote, c'est-à-dire due aux porteuses directement voisines du pilote considéré, dans l'espace temps d'une part, et dans l'espace fréquence d'autre part.

Cependant, un inconvénient majeur de cette technique est qu'elle n'est pas adaptée lorsque le nombre de pilotes augmente. Or afin d'améliorer le rapport signal à bruit, il est avantageux d'augmenter le nombre de pilotes émis par une antenne, répartis dans le signal multiporteuse.

Malheureusement, selon cette technique de génération d'un signal multiporteuse de l'art antérieur, les couronnes entourant chacun des pilotes doivent être disjointes, ce qui nécessite que les pilotes soient séparés par au moins deux porteuses en temps et/ou en fréquence.

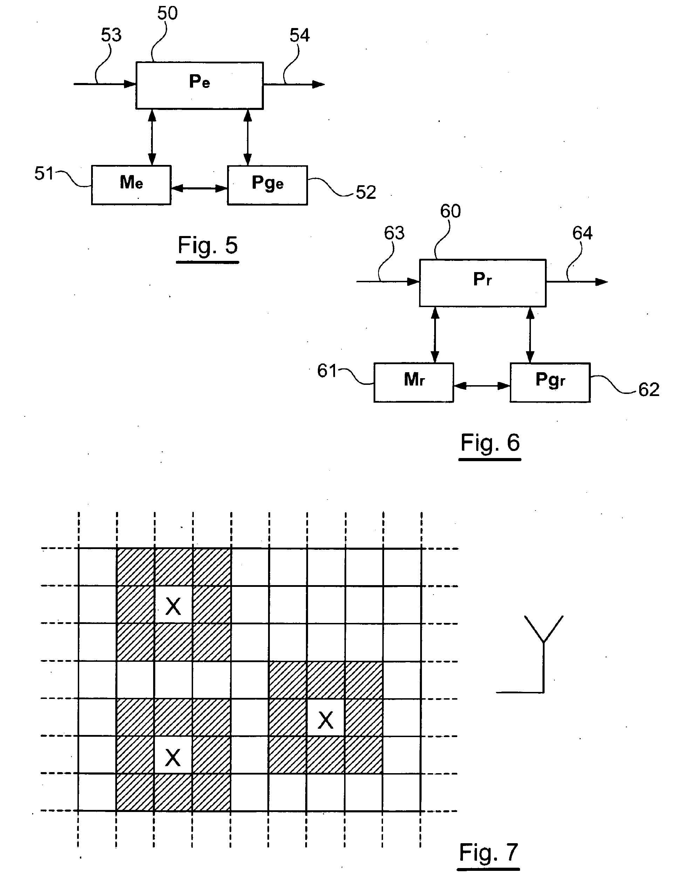

Plus précisément, comme illustré en relation avec la figure 7, en augmentant le nombre de pilotes, on augmente le nombre de couronnes autour de ces pilotes, et le nombre de valeurs figées.

Ainsi, l'utilisation d'une couronne autour de chacun des pilotes induit rapidement un problème d'espace dans le plan temps-fréquence. Autrement dit, l'augmentation du nombre de pilotes engendre une utilisation plus importante de la ressource temps-fréquence.

De même, cette technique de l'art antérieur n'est pas adaptée à une transmission dans un système de type MIMO ou MISO, dans lequel plusieurs pilotes associés à des antennes différentes sont positionnés à des emplacements distincts dans le plan temps-fréquence afin d'estimer les canaux de propagation entre les antennes d'émission et de réception.

En effet, dans le cadre d'une transmission multi-antennes, des pilotes sont associés à chacune des antennes d'émission, augmentant ainsi le nombre de pilotes.

Afin de permettre une estimation correcte du canal de propagation, il est donc indispensable qu'à l'emplacement temps-fréquence d'un pilote d'une antenne, il n'y ait pas d'interférence ou de brouillage induit par l'antenne voisine.

Malheureusement, la technique antérieure ne prévoit pas ce cas, et est par conséquent mal adaptée à une transmission à plusieurs antennes.

## 3. Objectifs de l'invention

L'invention a notamment pour objectif de pallier ces inconvénients de l'art antérieur.

Plus précisément, un objectif de l'invention est de fournir une technique de transmission d'un signal à porteuses multiples permettant de réduire l'interférence intrinsèque entre symboles et/ou entre porteuses.

Notamment, un objectif de l'invention est de proposer une telle technique qui soit adaptée à la transmission d'un nombre important de pilotes dans un signal multiporteuse, par exemple dans des systèmes multi-antennes de type MISO ou MIMO.

Un autre objectif de l'invention est de fournir une telle technique qui soit adaptée à la transmission de signaux de type OFDM/OQAM.

L'invention a encore pour objectif de proposer une technique de transmission qui soit simple et peu coûteuse à mettre en oeuvre, et qui présente des performances accrues par rapport aux techniques de l'art antérieur, en permettant notamment une estimation de canal plus précise que les techniques de l'art antérieur.

## 4. Exposé de l'invention

Ces objectifs, ainsi que d'autres qui apparaîtront par la suite, sont atteints à l'aide d'un procédé de transmission d'un signal multiporteuse formé d'une succession temporelle de symboles constitués d'un ensemble d'éléments de données, chacun des éléments de données modulant une fréquence porteuse du signal, lesdits éléments de données comprenant d'une part des éléments de données de référence appelés pilotes, la valeur à l'émission d'au moins certains des pilotes étant connue d'au moins un récepteur destiné à effectuer une réception du signal, et d'autre part des éléments de données informatifs, la valeur à l'émission des éléments de données informatifs n'étant pas connue a priori du ou desdits récepteur(s), une des fréquences porteuses modulée à un instant donné par un des éléments de données étant appelée porteuse.

Selon l'invention, un tel procédé de transmission met en oeuvre :

- une étape de calcul d'une interférence affectant un ensemble d'au moins deux éléments de données à protéger, les éléments de données à protéger étant espacés deux à deux d'au plus une porteuse en temps et d'au plus une porteuse en fréquence, ladite interférence tenant compte de la valeur des éléments de données à protéger et des valeurs des éléments de données d'une couronne de contour constituée des porteuses directement voisines des éléments de données à protéger ; et
- une étape de détermination d'au moins une valeur à attribuer à au moins un élément de données de la couronne de contour, pour réduire, en réception, ladite interférence calculée.

Ainsi, l'invention repose sur une approche tout à fait nouvelle et inventive du calcul et de la réduction d'une interférence affectant des éléments de données à protéger d'un signal à porteuses multiples, afin de permettre une estimation correcte du canal de propagation, sans gaspiller la ressource temps-fréquence.

En effet, la technique selon l'invention permet notamment, par rapport aux techniques de l'art antérieur, d'optimiser la ressource temps-fréquence, puisqu'elle ne nécessite pas l'utilisation d'un intervalle de garde, pendant lequel aucune information utile n'est transmise, ni l'utilisation d'une couronne autour de chacun des pilotes, introduisant rapidement un problème de place dans le plan temps-fréquence.

L'invention, de par la compacité de la couronne de contour utilisée, est ainsi bien adaptée aux transmissions multi-antennes mettant en oeuvre au moins deux antennes d'émission, et aux transmissions mono-antennes pour lesquelles le nombre de pilotes répartis dans le signal multiporteuse est important, de sorte que plusieurs pilotes sont positionnés à des emplacements temps/fréquence espacés d'au plus une porteuse en temps et en fréquence.

Plus précisément, on considère que les éléments de données à protéger sont séparés par au plus une porteuse en temps et en fréquence, ce qui signifie que les éléments de données à protéger sont espacés deux à deux d'au plus une porteuse en temps et d'au plus une porteuse en fréquence.

On suppose notamment que le canal de propagation entre une antenne d'émission et une antenne de réception est identique pour l'ensemble des éléments de données de la couronne de contour et les éléments de données à protéger.

Avantageusement, chacun des éléments de données à protéger étant entouré par une couronne de proximité constituée des porteuses directement voisines de l'élément de données à protéger, les étapes de calcul et de détermination sont mises en oeuvre sous la forme d'au moins une itération des sous-étapes suivantes :

- calcul d'une interférence partielle affectant un des éléments de données à protéger, l'interférence partielle tenant compte de la valeur de l'élément de données à protéger et des valeurs des éléments de données de la couronne de proximité entourant l'élément de données à protéger ; et
- détermination d'au moins une valeur à attribuer à au moins un élément de données de la couronne de proximité n'appartenant pas à l'ensemble d'éléments de données à protéger, pour réduire, en réception, l'interférence partielle calculée,

une itération suivante tenant compte des valeurs attribuées lors d'une itération courante,
de façon à déterminer les valeurs à attribuer à au moins un élément de données de la couronne de contour.

Ainsi, selon une variante de réalisation, on applique la technique d'annulation de l'interférence étape par étape à chacun des éléments de données à protéger, en considérant pour chaque élément de données à protéger une couronne de proximité entourant cet élément, et en cherchant à annuler l'interférence partielle affectant cet élément.

On considère notamment que la première itération permet d'annuler l'interférence partielle affectant un premier élément de données à protéger, tenant compte de la valeur de l'élément de données à protéger et de la valeur des éléments de données de sa couronne de proximité, en déterminant au moins une valeur à attribuer à un élément de la couronne de proximité, autre qu'un autre élément de données à protéger. En effet, on considère que la valeur d'un élément de données à protéger ne peut pas être modifiée.

On réitère ensuite ces étapes pour chaque élément de données, en tenant compte des valeurs attribuées au cours des itérations précédentes. Par conséquent, si on cherche à annuler, ou à tout le moins réduire, l'interférence partielle affectant un deuxième élément de données à protéger, on pourra attribuer une valeur à au moins un élément de la couronne de proximité entourant ce deuxième élément de données à protéger, autre qu'un autre élément de données à protéger, ou qu'un élément de données dont on a déjà déterminé la valeur au cours d'une itération précédente.

En procédant ainsi étape par étape, on peut déterminer les valeurs à attribuer à au moins un élément de données de la couronne de contour constituée des porteuses directement voisines des éléments de données à protéger, de sorte à annuler, ou à tout le moins réduire, l'interférence affectant l'ensemble des éléments de données à protéger.

De façon préférentielle, le signal multiporteuse étant émis par une première source et appelé premier signal, les éléments de données à protéger comprennent :

- un premier ensemble d'au moins un pilote du premier signal ;
- un second ensemble d'au moins un élément de données à protéger positionné dans l'espace temps-fréquence, à au moins un emplacement correspondant à l'emplacement d'au moins un pilote d'au moins un deuxième signal multiporteuse, émis par au moins une deuxième source, et présentant la même structure que le premier signal.

L'invention trouve ainsi des applications dans des systèmes multi-antennes mettant en oeuvre 2, 3, 4 ou plus, antennes d'émission.

On considère ainsi, pour une antenne d'émission, que les éléments de données à protéger appartiennent soit à un premier ensemble, soit à un second ensemble.

Plus précisément, les éléments de données à protéger, pour une première antenne d'émission émettant un premier signal, sont des pilotes du premier signal (premier ensemble), ou des éléments de données positionnés dans l'espace temps-fréquence aux emplacements correspondants aux emplacements de pilotes d'un deuxième signal émis par une deuxième antenne, et/ou aux emplacements de pilotes d'un troisième signal émis par une troisième antenne, etc (second ensemble).

Autrement dit, on utilise les éléments de données à protéger du second ensemble pour annuler l'interférence affectant les pilotes associés à une antenne autre que celle à laquelle sont associés les pilotes du premier ensemble.

De manière avantageuse, les éléments de données à protéger du second ensemble sont des éléments de données informatifs, les éléments de données à protéger des premier et second ensembles formant une séquence orthogonale à chaque séquence du au moins un deuxième signal, positionnée aux emplacements correspondants dans l'espace temps-fréquence.

Ainsi, la séquence formée par les éléments de données à protéger des premier et second ensembles d'un premier signal multiporteuse est orthogonale à chacune des séquences portées par chacun des autres signaux multiporteuse, par exemple un deuxième, un troisième et un quatrième signal multiporteuse dans un système mettant en oeuvre 4 antennes d'émission, positionnées aux mêmes emplacements dans l'espace temps-fréquence.

Ces différentes séquences étant orthogonales entre elles, la récupération des éléments de données en réception s'effectue sans difficulté.

Préférentiellement, le signal multiporteuse est de type OFDM/OQAM.

En effet, on s'intéresse plus particulièrement à la réduction de l'interférence intrinsèque entre symboles et/ou entre porteuses pour les modulations de type réel, notamment en vue d'une estimation de canal par pilotes répartis. En effet, le processus d'estimation de canal est plus délicat pour les signaux de type OFDM/OQAM, pour lesquels on ne dispose que d'une orthogonalité des translatées au sens réel. Il est donc particulièrement intéressant de chercher à améliorer l'estimation de canal pour ce type de signaux multiporteuse.

Avantageusement, les pilotes du signal multiporteuse portent des valeurs réelles. Ceci est notamment vérifié lorsque le signal à porteuses multiples est de type OFDM/OQAM.

L'invention concerne également un signal multiporteuse formé d'une succession temporelle de symboles constitués d'un ensemble d'éléments de données, chacun des éléments de données modulant une fréquence porteuse du signal, les éléments de données comprenant d'une part des éléments de données de référence appelés pilotes, la valeur à l'émission d'au moins certains des pilotes étant connue d'au moins un récepteur destiné à effectuer une réception du signal, et d'autre part des éléments de données informatifs, la valeur à l'émission des éléments de données informatifs n'étant pas connue a priori du ou des récepteur(s), une des fréquences porteuses modulée à un instant donné par un des éléments de données étant appelée porteuse.

Selon l'invention, le signal comprend un ensemble d'au moins deux éléments de données à protéger, les éléments de données à protéger étant espacés deux à deux d'au plus une porteuse en temps et d'au plus une porteuse en fréquence, au moins une valeur étant attribuée à au moins un élément de données d'une couronne de contour constituée des porteuses directement voisines des éléments de données à protéger, pour réduire, en réception, une interférence affectant les éléments de données à protéger,
l'interférence tenant compte de la valeur des éléments de données à protéger et des valeurs des éléments de données de la couronne de contour.

Plus précisément, on considère que les éléments de données à protéger sont séparés par au plus une porteuse en temps et en fréquence, ce qui signifie que les éléments de données à protéger sont espacés deux à deux d'au plus une porteuse en temps et d'au plus une porteuse en fréquence.

Avantageusement, les éléments de données à protéger du signal à porteuses multiples, dit premier signal, comprennent :

- un premier ensemble d'au moins un pilote du premier signal ;
- un second ensemble d'au moins un élément de données à protéger positionné dans l'espace temps-fréquence, à au moins un emplacement correspondant à l'emplacement d'au moins un pilote d'au moins un deuxième signal multiporteuse, émis par au moins une deuxième source, et présentant la même structure que le premier signal ;

tels que décrit précédemment.

De manière préférentielle, le signal à porteuses multiples est de type OFDM/OQAM.

L'invention concerne encore un procédé de réception d'un signal multiporteuse formé d'une succession temporelle de symboles constitués d'un ensemble d'éléments de données.

Selon l'invention, le signal reçu comprenant un ensemble d'au moins deux éléments de données à protéger espacés deux à deux d'au plus une porteuse en temps et d'au plus une porteuse en fréquence, un traitement étant effectué avant émission sur le signal de façon à attribuer au moins une valeur à au moins un élément de données d'une couronne de contour constituée des porteuses directement voisines des éléments de données à protéger pour réduire une interférence affectant les éléments de données à protéger, le procédé de réception met en oeuvre :

- une étape d'estimation de la fonction de transfert d'un canal de transmission, à partir d'au moins certains des éléments de données à protéger ; et
- une étape de récupération des éléments de données de la couronne de contour mettant en oeuvre un traitement inverse du traitement effectué avant émission.

On peut ainsi remarquer que la valeur d'au moins certains pilotes est connue d'un récepteur.

Autrement dit, un récepteur connaît la valeur d'au moins certains pilotes véhiculés par le signal à porteuses multiples, et notamment la valeur des pilotes dont il souhaite se servir pour effectuer l'estimation du canal de propagation entre une antenne d'émission et ce récepteur, et éventuellement la valeur de pilotes émis par au moins une autre antenne d'émission interférant avec ces pilotes.

On peut également remarquer que dans une application particulière de l'invention, par exemple dans le cadre DVB-T, certains pilotes véhiculent une information, et ne sont donc pas nécessairement connus du ou des récepteurs.

L'invention concerne encore un dispositif d'émission d'un signal multiporteuse formé d'une succession temporelle de symboles constitués d'un ensemble d'éléments de données.

Selon l'invention, un tel dispositif comprend :

- des moyens de calcul d'une interférence affectant un ensemble d'au moins deux éléments de données à protéger, les éléments de données à protéger étant espacés deux à deux d'au plus une porteuse en temps et d'au plus une porteuse en fréquence, l'interférence tenant compte de la valeur des éléments de données à protéger et des valeurs des éléments de données d'une couronne de contour constituée des porteuses directement voisines des éléments de données à protéger ; et
- des moyens de détermination d'au moins une valeur à attribuer à au moins un élément de données de la couronne de contour, pour réduire, en réception, l'interférence calculée.

Un tel dispositif peut notamment mettre en oeuvre le procédé de transmission tel que décrit précédemment.

L'invention concerne en outre un dispositif de réception d'un signal multiporteuse formé d'une succession temporelle de symboles constitués d'un ensemble d'éléments de données.

Selon l'invention, le signal reçu comprenant un ensemble d'au moins deux éléments de données à protéger espacés deux à deux d'au plus une porteuse en temps et d'au plus une porteuse en fréquence, un traitement étant effectué avant émission sur le signal de façon à attribuer au moins une valeur à au moins un élément de données d'une couronne de contour constituée des porteuses directement voisines des éléments de données à protéger pour réduire une interférence affectant les éléments de données à protéger, le dispositif comprend :

- des moyens d'estimation de la fonction de transfert d'un canal de transmission, à partir d'au moins certains des éléments de données à protéger ; et
- des moyens de récupération des éléments de données de la couronne de contour mettant en oeuvre un traitement inverse du traitement effectué avant émission.

Un tel dispositif peut notamment mettre en oeuvre le procédé de réception tel que décrit précédemment.

Finalement, l'invention concerne un produit programme d'ordinateur téléchargeable depuis un réseau de communication et/ou stocké sur un support lisible par ordinateur et/ou exécutable par un microprocesseur, comprenant des instructions de code de programme pour la mise en oeuvre du procédé de transmission tel que décrit précédemment, et un produit programme d'ordinateur téléchargeable depuis un réseau de communication et/ou stocké sur un support lisible par ordinateur et/ou exécutable par un microprocesseur comprenant des instructions de code de programme pour la mise en oeuvre du procédé de réception tel que décrit précédemment.

## 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1 illustre la répartition dans l'espace temps-fréquence des éléments de données à protéger de deux signaux multiporteuses émis par deux antennes de transmission, et la couronne de contour les entourant ;
- les figures 2A, 2B, 3A et 3C présentent différentes configurations possibles des éléments de données à protéger dans des systèmes mettant en oeuvre 3 ou 4 antennes de transmission, et la couronne de contour les entourant ;
- la figure 4 illustre une application à la transmission, dans un système multi-antennes, de plusieurs pilotes dans une même couronne de contour ;
- la figure 5 présente la structure d'un système de transmission d'un signal à porteuses multiples selon l'invention ;
- la figure 6 présente la structure d'un système de réception d'un signal à porteuses multiples selon l'invention ;
- la figure 7 illustre l'application des techniques de l'art antérieur à des systèmes mettant en oeuvre plusieurs pilotes.

## 6. Description d'un mode de réalisation de l'invention

### 6.1 Principe général

Le principe général de l'invention repose sur le calcul d'une interférence affectant un ensemble composé d'au moins deux éléments de données à protéger, et la détermination d'au moins une valeur à attribuer aux éléments de données d'une couronne de contour entourant les éléments de données à protéger, pour réduire cette interférence.

L'invention permet ainsi l'annulation, ou à tout le moins la réduction, d'une interférence intrinsèque due au moins à la couronne de contour sur certaines porteuses du réseau temps-fréquence correspondant à des éléments de données à protéger, notamment pour un signal à porteuses multiples du type OFDM/OQAM.

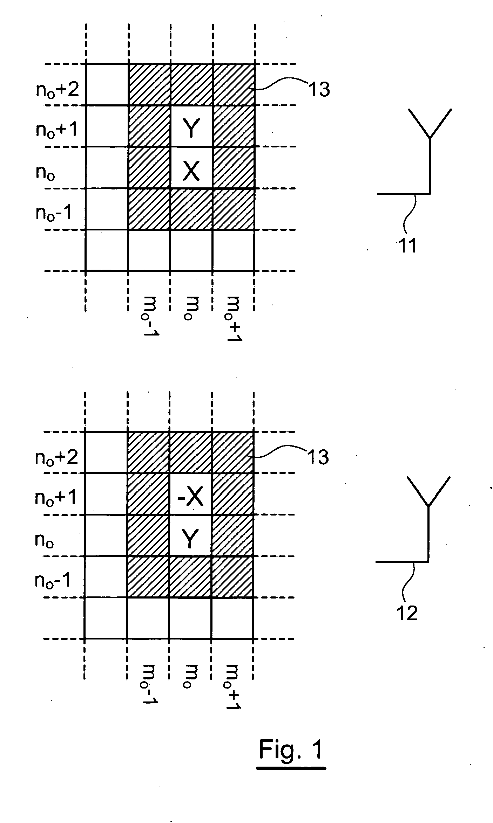

On présente, en relation avec la figure 1, une technique de transmission d'un signal à porteuses multiples permettant de réduire, en réception, l'interférence entre symboles affectant les signaux à porteuses multiples, selon un mode de réalisation préférentiel de l'invention.

On considère notamment dans la suite du document un signal à porteuses multiples de type OFDM/OQAM, tel que présenté en annexe 1 de la présente demande de brevet.

On suppose également que la fonction prototype $g(t)$ associée au signal à porteuses multiples vérifie les propriétés des fonctions d'ambiguïté décrites en annexe 2, qui fait partie intégrante de la présente demande de brevet.

On suppose finalement que le canal de propagation entre une antenne d'émission et une antenne de réception est identique pour l'ensemble des éléments de données de la couronne de contour et les éléments de données à protéger.

La figure 1 illustre notamment la répartition dans l'espace temps-fréquence de symboles du signal multiporteuse sur une pluralité de fréquences porteuses modulées indépendamment, le signal multiporteuse étant formé d'une succession temporelle de symboles constitués d'éléments de données. La modulation OFDM/OQAM découpe ainsi le canal en cellules selon les axes du temps (axe vertical) et des fréquences (axe horizontal). En particulier, chacune des porteuses est orthogonale à la précédente.

A chaque cellule fréquence/temps (par exemple la cellule $(m_0, n_0)$, où $m_0$ correspond à une fréquence et $n_0$ à un temps) est attribuée une porteuse dédiée. Un symbole du signal multiporteuse comprend l'ensemble des informations portées par l'ensemble des porteuses à un instant $t$. La figure 1 illustre par exemple les symboles $n_0-1$, $n_0$, $n_0+1$, ....

Certaines porteuses portent des éléments de données de référence appelés pilotes, la valeur à l'émission de certains des pilotes étant connue d'au moins un récepteur destiné à effectuer une réception du signal, tandis que les autres porteuses portent des éléments de données informatifs dont la valeur à l'émission n'est pas, a priori, connue du ou des récepteurs.

On peut notamment remarquer que dans une application particulière de l'invention, par exemple dans le cadre DVB-T, certains pilotes véhiculent une information, et ne sont donc pas nécessairement connus du ou des récepteurs.

### 6.2 Méthode globale

La figure 1 illustre ainsi la transmission de deux pilotes associés chacun à une antenne d'émission, dans un système comprenant deux antennes d'émission 11 et 12, les deux pilotes étant positionnés à des emplacements voisins dans le plan temps-fréquence.

Plus précisément, au moins un premier pilote associé à la première antenne d'émission 11 est positionné à l'emplacement $(m_0, n_0)$ dans l'espace temps-fréquence et un second pilote associé à la seconde antenne d'émission 12 est positionné à l'emplacement $(m_0, n_0+1)$ dans l'espace temps-fréquence.

Selon l'invention, les éléments de données portés par les porteuses situées aux emplacements correspondant aux cellules $(m_0, n_0)$ et $(m_0, n_0+1)$, définissent l'ensemble des éléments de données à protéger.

Au cours d'une première étape, une interférence affectant les éléments de données à protéger est calculée. Plus précisément cette interférence tient compte à la fois des valeurs des éléments de données à protéger, et des valeurs des éléments de données d'une couronne de contour 13 constituée des porteuses directement voisines dans l'espace temps-fréquence des éléments de données à protéger.

La couronne de contour 13 est donc définie, dans l'exemple de la figure 1, par les 10 porteuses positionnées aux emplacements $(m_0-1, n_0-1)$, $(m_0, n_0-1)$, $(m_0+1, n_0-1)$, $(m_0+1, n_0)$, $(m_0+1, n_0+1)$, $(m_0+1, n_0+2)$, $(m_0, n_0+2)$, $(m_0-1, n_0+2)$, $(m_0-1, n_0+1)$, $(m_0-1, n_0)$.

On peut notamment remarquer que selon l'invention, chacune des antennes présente une couronne de contour de même forme et située aux mêmes emplacements temps-fréquence, permettant d'annuler l'interférence affectant les éléments de données à protéger de chacune des antennes.

Au cours d'une seconde étape, on détermine une valeur à attribuer à au moins un élément de données de la couronne de contour 13, c'est-à-dire à au moins un élément de données porté par l'une des 10 porteuses citées précédemment, permettant de réduire, en réception, l'interférence calculée.

Pour déterminer les valeurs à attribuer aux éléments de la couronne de contour, il est alors nécessaire de résoudre un système de N équations à N inconnues, N étant le nombre d'éléments de données à protéger.

On cherche ainsi à annuler l'interférence affectant l'ensemble des éléments de données à protéger, provenant notamment de la couronne de contour, en résolvant l'équation suivante :

$$0 = \sum_{(m_j, n_j \in \Omega) \notin \Theta} a_{m_j, n_j} \left\langle x_{m_j, n_j} \middle| x_{m_i, n_i} \right\rangle + \sum_{m_k, n_k \in \Theta} a_{m_k, n_k} \left\langle x_{m_k, n_k} \middle| x_{m_i, n_i} \right\rangle,$$

avec : $\Omega$ l'ensemble des emplacements formant la couronne de contour ;

$(m_i, n_i)$ l'emplacement des éléments de données à protéger, pour $i$ allant de 1 à N ;

$a_{(m_k, n_k)}$ les valeurs des éléments de données à déterminer de la couronne de contour, pour $k$ allant de 1 à N, positionnés aux emplacements $(m_k, n_k)$ formant l'ensemble $\Theta$.

Autrement dit, afin d'améliorer l'estimation du canal de propagation sans réduire la place occupée dans le plan temps-fréquence par le voisinage des éléments de données à protéger, on transmet sur chaque antenne des séquences orthogonales d'éléments de données à protéger sur les emplacements temps-fréquence situés à l'intérieur de la couronne de contour 13. Par exemple, comme illustré en relation avec la figure 1, au temps $t_0$ l'antenne 11 émet un élément de données à protéger de valeur X situé à l'emplacement $(m_0, n_0)$, et l'antenne 12 émet simultanément un élément de données à protéger de valeur Y situé à l'emplacement $(m_0, n_0)$. Au temps $t_1$, l'antenne 11 émet un élément de données à protéger de valeur Y situé à l'emplacement $(m_0, n_0+1)$, et l'antenne 12 émet simultanément un élément de données à protéger de valeur -X situé à l'emplacement $(m_0, n_0+1)$.

On transmet donc sur chaque antenne des séquences de deux éléments de données sur les deux emplacements temps-fréquence situés à l'intérieur de la couronne de contour 13.

La condition sur ces séquences pour permettre la récupération des valeurs du canal est que les valeurs des éléments de données à protéger soient réelles et que les séquences soient orthogonales.

On peut notamment remarquer que les séquences orthogonales réelles ont nécessairement la forme [X, Y] et (+/-)[Y, -X].

Selon un mode de réalisation avantageux de l'invention, la porteuse portant la valeur X porte une valeur nulle, et la porteuse portant la valeur Y est un pilote. On transmet ainsi un « zéro » et un pilote en inversant ces positions d'une antenne à l'autre. On peut notamment remarquer que dans ce cas, il n'y a pas de recouvrement des pilotes associés à chacune des antennes, puisque dans les systèmes multi-antennes, les antennes d'émission sont synchronisées.

### 6.3 Méthode itérative

Selon une variante de réalisation, il est également possible d'appliquer la technique d'annulation de l'interférence étape par étape.

On considère pour ce faire une couronne de proximité entourant chacun des éléments de données à protéger.

Par exemple, en se référant de nouveau à la figure 1, le premier pilote associé à l'antenne 11 correspondant à l'élément de données à protéger positionné à l'emplacement temps-fréquence $(m_0, n_0)$ est entouré par les éléments de données positionnés aux emplacements $(m_0-1, n_0-1)$, $(m_0, n_0-1)$, $(m_0+1, n_0-1)$, $(m_0+1, n_0)$, $(m_0+1, n_0+1)$, $(m_0, n_0+1)$, $(m_0-1, n_0+1)$, $(m_0-1, n_0)$, formant une première couronne de proximité associée à ce premier pilote.

Le second pilote associé à l'antenne 12 correspondant à l'élément de données à protéger positionné à l'emplacement temps-fréquence $(m_0, n_0+1)$ est entouré par les éléments de données positionnées aux emplacements $(m_0-1, n_0)$, $(m_0, n_0)$, $(m_0+1, n_0)$, $(m_0+1, n_0+1)$, $(m_0+1, n_0+2)$, $(m_0, n_0+2)$, $(m_0-1, n_0+2)$, $(m_0-1, n_0+1)$ formant une seconde couronne de proximité associée à ce second pilote.

Selon cette variante de réalisation, les étapes de calcul de l'interférence et de détermination d'au moins une valeur à attribuer à la couronne de contour 13 sont mises en oeuvre sous la forme suivante :

- calcul d'une première interférence partielle affectant le premier pilote, la première interférence partielle tenant compte de la valeur du premier pilote positionné à l'emplacement $(m_0, n_0)$ et des valeurs des éléments de données de la première couronne de proximité ; et
- détermination d'au moins une valeur à attribuer à au moins un élément de données de la première couronne de proximité n'appartenant pas à l'ensemble d'éléments de données à protéger, pour réduire, en réception, l'interférence partielle calculée. Autrement dit, on détermine au moins une valeur à attribuer à un élément de données positionné à l'emplacement $(m_0-1, n_0-1)$, $(m_0, n_0-1)$, $(m_0+1, n_0-1)$, $(m_0+1, n_0)$, $(m_0+1, n_0+1)$, $(m_0-1, n_0+1)$, $(m_0-1, n_0)$, mais pas à l'élément de données situé à l'emplacement $(m_0, n_0+1)$, car il s'agit d'un élément de données à protéger dont on ne peut pas modifier la valeur. On peut donc agir sur ces sept valeurs portées par des éléments de données situés aux sept emplacements précités ;
- calcul d'une seconde interférence partielle affectant le second pilote, la seconde interférence partielle tenant compte de la valeur du second pilote positionné à l'emplacement $(m_0, n_0+1)$ et des valeurs des éléments de données de la seconde couronne de proximité ; et
- détermination d'au moins une valeur à attribuer à au moins un élément de données de la seconde couronne de proximité n'appartenant pas à l'ensemble d'éléments de données à protéger, et dont la valeur n'a pas été déterminée au cours d'une étape de détermination précédente.

Autrement dit, si au cours de l'étape de détermination précédente on a attribué une valeur à chacun des éléments de la première couronne de proximité, excepté aux éléments de données à protéger (ce qui correspond aux sept valeurs précitées), il reste à déterminer les valeurs à attribuer aux éléments restants de la seconde couronne de proximité, à savoir la valeur des éléments positionnés aux emplacements $(m_0-1, n_0+2)$, $(m_0, n_0+2)$, $(m_0+1, n_0+2)$.

On peut notamment remarquer que cette technique itérative pourrait s'appliquer sur des couronnes de proximité disjointes, dans un système multi-antennes de sorte qu'à l'emplacement temps-fréquence d'un pilote associé à une antenne, on émette un élément de données à protéger de valeur nulle sur les autres antennes.

La technique selon l'invention consisterait alors à annuler l'interférence sur chacun des éléments de données à protéger, en mettant éventuellement en oeuvre un traitement parallèle des différentes couronnes de proximité, celles-ci étant disjointes.

Dans le cas général, si le signal multiporteuse met en oeuvre une fonction prototype de type Iota, les étapes de calcul d'une première interférence partielle et de détermination d'au moins une valeur à attribuer à au moins un élément de données de la première couronne de proximité autre qu'un élément de données à protéger, mettent en oeuvre la relation suivante, permettant de déterminer les sept valeurs précitées :

$$\alpha\left((-1)^{n_0}\left(a_{m_0+1,n_0} - a_{m_0-1,n_0}\right) + \left(a_{m_0-1,n_0+1} - a_{m_0,n_0-1}\right)\right)$$
$$-\beta(-1)^{n_0}\left(a_{m_0+1,n_0+1} + a_{m_0+1,n_0-1} + a_{m_0-1,n_0-1}\right) = 0$$

avec $a_{m_0,n_0}$ la valeur de la porteuse située à l'emplacement temps-fréquence $(m_0, n_0)$, et $\alpha$ et $\beta$ des coefficients définis par le choix de la fonction prototype.

Cette relation est valable lorsque les séquences transmises sont de la forme $[X,0]$ et $[0,X]$, et lorsque les pilotes sont adjacents sur l'axe temporel, comme illustré en relation avec la figure 1.

Dans le cas où les séquences transmises sont de la forme $[X, Y]$ et $(+/-)[Y,-X]$ il faut tenir compte de la valeur du pilote adjacent dans la relation de première couronne de proximité. Autrement dit, il faut tenir compte de la valeur des éléments de données à protéger (par exemple le second pilote) situé dans la couronne de proximité associée à un premier pilote.

Par exemple, pour l'antenne 11 et la séquence $[X, Y]$, on obtient la relation suivante permettant d'annuler l'interférence intrinsèque à la position du premier pilote ($X$) :

$$\alpha\left((-1)^{no}\left(a_{mo+1,no}-a_{mo-1,no}\right)+\left(a_{m_0-1,n_0+1}-a_{m_0,n_0-1}\right)\right)$$
$$-\beta(-1)^{no}\left(a_{mo+1,no+1}+a_{mo+1,no-1}+a_{mo-1,no-1}+Y\right)=0$$

Pour annuler l'IES due à la première couronne de proximité relative à la porteuse ($m_0,n_0$), il suffit de vérifier l'équation précédente. On rappelle qu'on entend par IES une interférence entre symboles temporels et/ou entre porteuses. Pour ce faire, on impose une valeur à un élément de données de cette couronne et on tient compte de la valeur du second pilote, appartenant à la première couronne de proximité. La première couronne de proximité transportera alors l'équivalent de six éléments de données informatifs.

La méthode directe pourrait être de choisir d'exprimer $a_{m_0-1,n_0-1}$ par exemple, en fonction des six autres éléments de la couronne. Néanmoins, une telle opération peut entraîner de fortes variations d'énergie entre cette porteuse et les six autres, et donc des problèmes de dynamique du signal multiporteuse. Par conséquent, on effectue une transformation linéaire et unitaire, de manière à lisser ce phénomène, et assurer ainsi la conservation de l'énergie. Il est donc préférable de fixer une des valeurs de la première couronne de proximité à 0 et d'utiliser une matrice de taille 7x7, le coefficient $a_{m_0-1,n_0+1}$ étant nul ou ayant une valeur fixe par construction (celle du deuxième pilote), ceci permettant d'annuler la relation ci-dessus tout en garantissant une puissance homogène des coefficients.

L'équation précédente dépendant du temps, cette transformation sera différente selon que les pilotes sont placés sur des symboles pairs ou impairs. Pour les symboles pairs (c'est-à-dire lorsque l'indice $n_0$ caractéristique de la position du pilote considéré dans l'espace temps est pair), un exemple de transformation est exprimé ci-après :

$$\begin{pmatrix} a_{m_0-1,n_0-1} \\ a_{m_0,n_0-1} \\ a_{m_0+1,n_0-1} \\ a_{m_0-1,n_0} \\ a_{m_0+1,n_0} \\ a_{m_0-1,n_0+1} \\ a_{m_0+1,n_0+1} \end{pmatrix} = M_0 \begin{pmatrix} e_0 \\ e_1 \\ e_2 \\ e_3 \\ e_4 \\ e_5 \\ e_6 \end{pmatrix}$$

avec par exemple :

$$M_0 = \begin{pmatrix} -\alpha & -\beta & -\alpha & \beta & -\beta & 0 & \alpha \\ -\beta & 0 & \beta & \alpha & \alpha & -\beta & \beta \\ -\alpha & \beta & 0 & -\beta & -\beta & \alpha & \alpha \\ \beta & \alpha & -\beta & -\alpha & 0 & -\beta & \beta \\ -\beta & \alpha & -\beta & 0 & \alpha & \beta & \beta \\ \alpha & -\beta & \alpha & -\beta & \beta & \alpha & 0 \\ 0 & \beta & -\alpha & \beta & \beta & \alpha & \alpha \end{pmatrix}$$

dans le cas où la valeur du second pilote est nulle ($Y = 0$), et où $e_6$ est pris égal à zéro. Les valeurs de $e_0$, $e_1$, $e_2$, $e_3$, $e_4$, $e_5$ sont prises dans l'alphabet $\left\{-\sqrt{e}, \sqrt{e}\right\}$, où e désigne l'énergie des symboles transmis sur chacune des porteuses

Pour les symboles impairs (c'est-à-dire lorsque l'indice $n_0$ caractéristique de la position du pilote considéré dans l'espace temps est impair), elle est représentée par exemple par la transformation :

$$
\begin{pmatrix}
a_{m_0-1,n_0-1} \\
a_{m_0,n_0-1} \\
a_{m_0+1,n_0-1} \\
a_{m_0-1,n_0} \\
a_{m_0+1,n_0} \\
a_{m_0-1,n_0+1} \\
a_{m_0+1,n_0+1}
\end{pmatrix}
= M_1
\begin{pmatrix}
e_0 \\
e_1 \\
e_2 \\
e_3 \\
e_4 \\
e_5 \\
e_6
\end{pmatrix}
$$

avec, par exemple,

$$
M_1 =
\begin{pmatrix}
-\alpha & -\beta & 0 & \beta & -\beta & \alpha & \alpha \\
-\beta & 0 & \beta & \alpha & \alpha & -\beta & \beta \\
-\alpha & \beta & \alpha & -\beta & -\beta & 0 & \alpha \\
\beta & \alpha & -\beta & 0 & -\alpha & -\beta & \beta \\
-\beta & \alpha & -\beta & -\alpha & 0 & \beta & \beta \\
0 & -\beta & \alpha & -\beta & \beta & \alpha & \alpha \\
\alpha & \beta & -\alpha & \beta & \beta & \alpha & 0
\end{pmatrix}
$$

dans le cas où la valeur du second pilote est nulle (Y = 0), et où $e_6$ est également pris égal à zéro.

On peut notamment remarquer que les exemples proposés ci-dessus pour les matrices $M_0$ et $M_1$ sont purement illustratif. En effet, ces matrices ne sont pas uniques.

Selon un mode de réalisation préféré, permettant d'assurer la conservation de l'énergie, les matrices $M_0$ et $M_1$ sont choisies symétriques et orthogonales.

Une fois les valeurs de la première couronne de proximité déterminée, on réitère ces étapes de calcul pour annuler l'interférence intrinsèque à la position du second pilote (Y).

Il reste donc à fixer la valeur des porteuses positionnées aux emplacements $(m_0-1, n_0+2)$, $(m_0, n_0+2)$, $(m_0+1, n_0+2)$, sachant que les autres valeurs de la seconde couronne de contour ont déjà été fixées au cours des étapes précédentes. On peut donc calculer la seconde interférence partielle $I_{m_0,n_0+1}$ générée sur ce second pilote par la seconde couronne de proximité (et le premier pilote adjacent s'il porte une valeur non nulle).

Il faut donc satisfaire la relation suivante :

$$
\alpha a_{m_0,n_0+2} - \beta(-1)^{n_0+1}\left(a_{m_0+1,n_0+2} + a_{m_0-1,n_0+2}\right) + I_{m_0,n_0+1} = 0
$$

De nouveau, on procède comme précédemment en fixant une des trois valeurs restant à déterminer à 0 et en appliquant une matrice de passage (de taille 3x3), permettant de garantir que cette relation est satisfaite tout en attribuant la même puissance aux coefficients transmis.

On peut finalement remarquer qu'en fixant la valeur de deux éléments de données parmi les 10 de la couronne de contour 13, il est possible d'annuler, ou à tout le moins de réduire, l'interférence intrinsèque affectant les deux positions à l'intérieur de cette couronne de contour, c'est-à-dire les deux éléments de données à protéger, qui correspondent par exemple à des pilotes permettant d'estimer le canal de propagation.

**6.4 Application dans des systèmes mettant en oeuvre plus de deux antennes d'émission**

On peut également remarquer que l'invention s'applique à des systèmes de transmission mettant en oeuvre plus de deux antennes d'émission, les éléments de données à protéger pouvant être séparés par au plus une porteuse en temps et/ou en fréquence. Autrement dit, les éléments de données à protéger sont espacés deux à deux d'au plus une porteuse en temps et d'au plus une porteuse en fréquence.

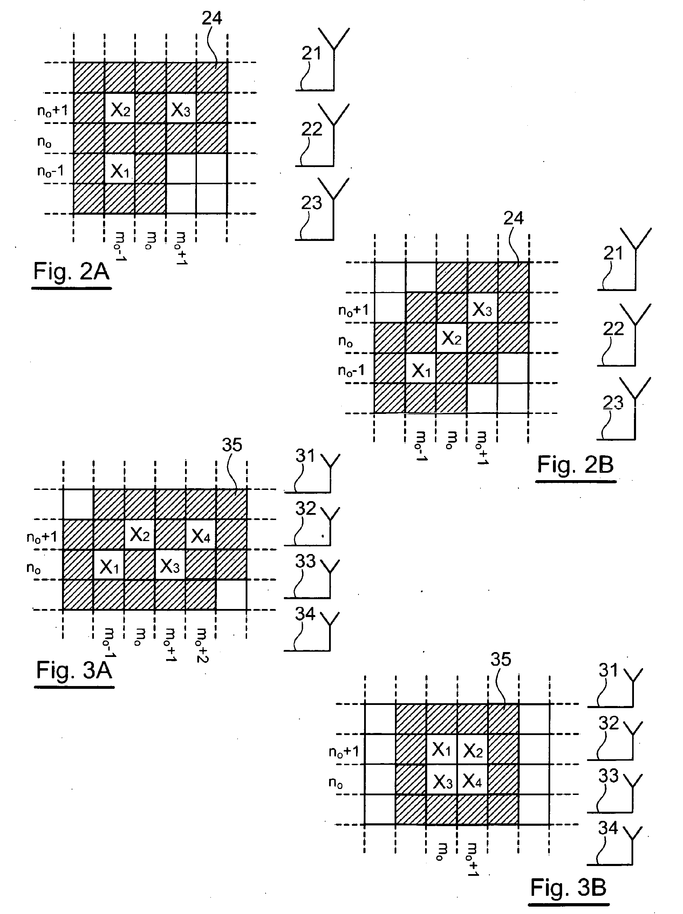

Les figures 2A et 2B illustrent ainsi la transmission d'un signal OFDM/OQAM à partir de trois antennes d'émission 21, 22 et 23, où les pilotes $X_1$, $X_2$ et $X_3$, respectivement associés à chacune des antennes 21, 22 et 23, sont regroupés en un groupe de pilotes adjacents ou laissant un intervalle d'une porteuse maximum entre eux, ledit groupe correspondant à l'ensemble des éléments de données à protéger, et sont entourés, pour tous les signaux multiporteuses émis par chacune des antennes, par une couronne de contour 24 tenant compte de l'envoi de l'ensemble des pilotes du groupe de pilotes.

Ainsi, comme illustré en figure 2A, au temps $t_0$ :

- l'antenne 21 émet un élément de données à protéger de valeur $X_1$ situé à l'emplacement $(m_0\text{-}1, n_0\text{-}1)$ ;
- l'antenne 22 émet simultanément un élément de données à protéger de valeur Y situé à l'emplacement $(m_0\text{-}1, n_0\text{-}1)$ ;
- et l'antenne 23 émet simultanément un élément de données à protéger de valeur Z situé à l'emplacement $(m_0\text{-}1, n_0\text{-}1)$.

Au temps $t_2$ :

- l'antenne 21 émet un élément de données à protéger de valeur Y situé à l'emplacement $(m_0\text{-}1, n_0\text{+}1)$ et un élément de données à protéger de valeur Z situé à l'emplacement $(m_0\text{+}1, n_0\text{+}1)$ ;
- l'antenne 22 émet simultanément un élément de données à protéger de valeur $X_2$ situé à l'emplacement $(m_0\text{-}1, n_0\text{+}1)$ et un élément de données à protéger de valeur Y situé à l'emplacement $(m_0\text{+}1, n_0\text{+}1)$ ;
- et l'antenne 23 émet simultanément un élément de données à protéger de valeur Z situé à l'emplacement $(m_0\text{-}1, n_0\text{+}1)$ et un élément de données à protéger de valeur $X_3$ situé à l'emplacement $(m_0\text{+}1, n_0\text{+}1)$.

On rappelle notamment que les conditions sur ces séquences émises par chacune des antennes est qu'elles doivent être orthogonales et que la valeur des pilotes doit être réelle, pour un signal multiporteuse de type OFDM/OQAM.

Ainsi, l'ensemble des éléments de données à protéger associé à l'antenne 21 est composé d'un premier ensemble comprenant le pilote $X_1$, et d'un second ensemble comprenant les éléments de données Y et Z.

On peut remarquer que dans la configuration à trois antennes illustrée en relation avec la figure 2A, les pilotes des différents signaux émis par chacune des antennes d'émission 21, 22 et 23 sont positionnés de manière à laisser un intervalle d'une porteuse maximum entre eux suivant l'axe temporel ou fréquentiel.

En réception, on peut par exemple considérer que seule la valeur du pilote $X_1$ est connue d'un premier récepteur, et permet d'estimer le canal de propagation entre l'antenne 21 et le premier récepteur. Ce premier récepteur ne connaît donc pas nécessairement la valeur des autres pilotes $X_2$ et $X_3$.

Un deuxième récepteur peut notamment connaître la valeur des pilotes $X_2$ et $X_3$, et ainsi estimer le canal de propagation entre les antennes 22, 23, et ce deuxième récepteur.

La figure 2B illustre une autre configuration à trois antennes d'émission, selon laquelle les porteuses des pilotes des différents signaux émis sont situées uniquement en diagonale (c'est-à-dire avec des décalages d'une porteuse à la fois suivant l'axe temporel et fréquentiel). Selon cette configuration, l'ensemble des éléments de données à protéger est défini par les éléments de données positionnés aux emplacements temps-fréquence $(m_0\text{-}1, n_0\text{-}1)$, $(m_0, n_0)$, $(m_0\text{+}1, n_0\text{+}1)$, la couronne de contour 24 permettant d'annuler l'interférence entre porteuses étant constituée des porteuses directement voisines des éléments de données à protéger.

Les figures 3A et 3B illustrent deux exemples de configuration dans un système de transmission mettant en oeuvre quatre antennes d'émission 31, 32, 33 et 34, chacun des pilotes $X_1$, $X_2$, $X_3$ et $X_4$ étant respectivement associé à chacune des antennes 31, 32, 33 et 34, la couronne de contour 35 permettant d'annuler l'IES étant constituée des porteuses directement voisines des éléments de données à protéger.

Selon la configuration de la figure 3A, au temps $t_0$ :

- l'antenne 31 émet un élément de données à protéger de valeur $X_1$ situé à l'emplacement $(m_0\text{-}1, n_0)$, et un élément de données à protéger de valeur Z situé à l'emplacement $(m_0\text{+}1, n_0)$ ;
- l'antenne 32 émet un élément de données à protéger de valeur W situé à l'emplacement $(m_0\text{-}1, n_0)$, et un élément de données à protéger de valeur Y situé à l'emplacement $(m_0\text{+}1, n_0)$ ;
- l'antenne 33 émet un élément de données à protéger de valeur Z situé à l'emplacement $(m_0\text{-}1, n_0)$, et un élément de données à protéger de valeur $X_3$ situé à l'emplacement $(m_0\text{+}1, n_0)$ ;
- l'antenne 34 émet un élément de données à protéger de valeur Y situé à l'emplacement $(m_0\text{-}1, n_0)$, et un élément

de données à protéger de valeur W situé à l'emplacement $(m_0+1, n_0)$ ;

Au temps $t_1$ :

- l'antenne 31 émet un élément de données à protéger de valeur Y situé à l'emplacement $(m_0, n_0+1)$, et un élément de données à protéger de valeur W situé à l'emplacement $(m_0+2, n_0+1)$ ;
- l'antenne 32 émet un élément de données à protéger de valeur $X_2$ situé à l'emplacement $(m_0, n_0+1)$, et un élément de données à protéger de valeur Z situé à l'emplacement $(m_0+2, n_0+1)$ ;
- l'antenne 33 émet un élément de données à protéger de valeur W situé à l'emplacement $(m_0, n_0+1)$, et un élément de données à protéger de valeur Y situé à l'emplacement $(m_0+2, n_0+1)$ ;
- l'antenne 34 émet un élément de données à protéger de valeur Z situé à l'emplacement $(m_0, n_0+1)$, et un élément de données à protéger de valeur $X_4$ situé à l'emplacement $(m_0+2, n_0+1)$ ;

Ainsi, l'ensemble des éléments de données à protéger associé à l'antenne 31 est composé d'un premier ensemble comprenant le pilote $X_1$, et d'un second ensemble comprenant les éléments de données Y, Z et W. Par exemple, les éléments de données à protéger de valeurs Y, Z et W sont des éléments de données informatifs.

Plus précisément, les séquences portées par chacune des antennes 31, 32, 33, 34, aux emplacements temps-fréquence des éléments de données à protéger doivent être orthogonales entre elles.

Selon le mode de réalisation préférentiel de l'invention, les éléments de données à protéger portant une valeur Y, Z ou W portent une valeur nulle.

La figure 3B illustre une autre configuration à quatre antennes d'émission, selon laquelle les pilotes des différents signaux émis sont situés aux emplacements temps-fréquence $(m_0, n_0)$, $(m_0, n_0+1)$, $(m_0+1, n_0+1)$, $(m_0+1, n_0)$, la couronne de contour 35 permettant d'annuler l'interférence entre porteuses étant constituée des porteuses directement voisines des éléments de données à protéger.

On remarque notamment au travers de ces différents exemples illustratifs et non limitatifs que les éléments de données à protéger sont séparés par au plus une porteuse en temps et/ou en fréquence, c'est-à-dire que les éléments de données à protéger sont espacés deux à deux d'au plus une porteuse en temps et d'au plus une porteuse en fréquence, quel que soit le nombre d'antennes d'émission. En effet, on considère que les éléments de données à protéger n'interfèrent pas, ou peu, entre eux lorsqu'ils sont espacés de deux porteuses en temps et/ou en fréquence, l'essentiel de l'interférence affectant un élément de données à protéger étant dû aux porteuses directement voisines.

La technique de transmission et d'annulation de l'interférence selon l'invention est donc généralisable à n'importe quelle configuration de pilotes mettant en oeuvre des couronnes de proximité imbriquées.

Par exemple, les pilotes des différents signaux émis peuvent être regroupés consécutivement ou laissant un intervalle d'une porteuse maximum entre eux suivant l'axe temporel, et consécutivement suivant l'axe fréquentiel, de manière à réduire le temps de latence survenant lors de l'utilisation d'un nombre important de pilotes.

Par ailleurs, dans le but d'améliorer le rapport signal à bruit de l'estimation de canal, des pilotes peuvent être regroupés à des positions adjacentes ou laissant un intervalle d'une porteuse maximum entre eux sur l'axe temporel et/ou fréquentiel de telle sorte qu'au moins deux pilotes dans ce groupe soient affectés à chacune des antennes d'émission.

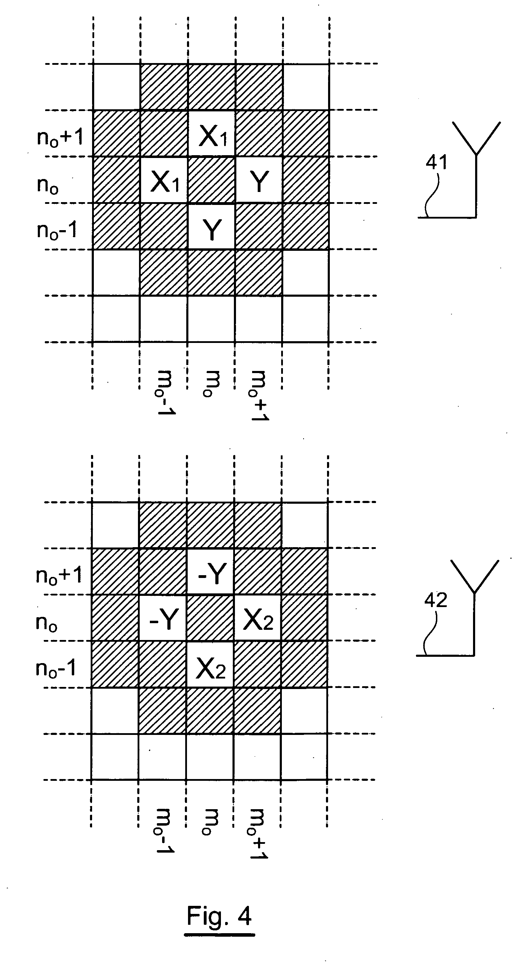

Cette variante est notamment illustrée en relation avec la figure 4.

### 6.5 Exemple d'application dans un système mettant en oeuvre deux antennes d'émission, et plusieurs pilotes dans la couronne de contour

On présente désormais en relation avec la figure 4 une variante de réalisation de l'invention selon laquelle on transmet un nombre accru de pilotes associés à chacune des antennes, et notamment plusieurs pilotes associés à une même antenne dans une même couronne de contour.

On considère par exemple la transmission de deux pilotes $X_1$ espacés d'au plus une porteuse en temps et/ou en fréquence sur la première antenne d'émission 41, et de deux pilotes $X_2$ espacés d'au plus une porteuse en temps et/ou en fréquence sur la seconde antenne d'émission 42. On considère également, pour chaque antenne d'émission, la transmission de porteuses portant la valeur nulle $(Y = 0)$ aux deux positions correspondant, dans l'espace temps-fréquence, aux emplacements des pilotes de l'autre antenne.

Autrement dit, en considérant la configuration de la figure 4 :

- à l'instant $t_0$, l'antenne 41 émet un élément de données à protéger de valeur nulle situé à l'emplacement $(m_0, n_0-1)$, et l'antenne 42 émet un pilote $X_2$ à l'emplacement correspondant $(m_0, n_0-1)$ ;
- à l'instant $t_1$, l'antenne 41 émet un pilote $X_1$ à l'emplacement $(m_0-1, n_0)$ et un élément de données à protéger de valeur nulle à l'emplacement $(m_0+1, n_0)$, et l'antenne 42 émet un élément de données à protéger de valeur nulle à

l'emplacement $(m_0-1, n_0)$ et un pilote $X_2$ à l'emplacement $(m_0+1, n_0)$ ;

- et à l'instant $t_2$, l'antenne 41 émet un pilote $X_1$ à l'emplacement $(m_0, n_0+1)$, et l'antenne 42 émet un élément de données à protéger de valeur nulle à l'emplacement $(m_0, n_0+1)$.

L'invention permet ainsi d'améliorer le rapport signal à bruit en augmentant le nombre de pilotes émis par une antenne, répartis dans le signal multiporteuse, sans pour autant gaspiller la ressource temps-fréquence, c'est-à-dire sans perdre en compacité de la couronne de contour.

Il est bien entendu que la valeur Y peut être différente de 0.

De plus, cette technique peut s'appliquer au cas d'un système de transmission mettant en oeuvre une seule antenne d'émission, émettant un signal à porteuses multiples comprenant un nombre accru de pilotes, et notamment plusieurs pilotes espacés par au plus une porteuse en temps et/ou en fréquence.

### 6.6 Estimation du canal

A partir des valeurs reçues sur chaque pilote, il est possible de retrouver les coefficients $H_n$ représentant une bonne estimation du canal, puisque l'interférence intrinsèque sur ces pilotes est réduite.

On considère par exemple un système de transmission mettant en oeuvre deux antennes de transmission, les pilotes associés à chacune des antennes étant situés sur deux fréquences adjacentes au même temps symbole (par exemple aux emplacements $(m_0, n_0)$ et $(m_0+1, n_0)$). On suppose que l'on a effectué l'opération d'annulation de l'IES telle que décrite précédemment, et on note [X, Y] et [Y, -X] les séquences transmises respectivement sur la première et sur la seconde antenne.

Dans ce cas, les deux pilotes vont interférer entre eux pendant la transmission.

On considère notamment $H_1$ la valeur du coefficient de canal de propagation entre la première antenne d'émission et l'antenne de réception, et $H_2$ la valeur du coefficient de canal de propagation entre la seconde antenne d'émission et l'antenne de réception. On rappelle que le canal de propagation entre une antenne d'émission donnée et l'antenne de réception est considéré comme invariant sur la couronne de contour.

Alors on aura en réception, en fonction des valeurs de la fonction d'ambiguïté du filtre OFDM/OQAM choisi :

$$R_1 = X.H_1 + Y.H_2 + j\alpha(-X).H_2 + j\alpha(Y).H_1 = H_1(X + j\alpha Y) + H_2(Y - j\alpha X)$$

$$R_2 = Y.H_1 - X.H_2 - j\alpha(Y).H_2 - j\alpha(X).H_1 = H_1(Y - j\alpha X) - H_2(X + j\alpha Y)$$

si l'indice temporel du symbole OFDM/OQAM est pair (c'est-à-dire si $n_0$ est pair) ;
ou :

$$R_1 = H_1(X + j\alpha Y) - H_2(Y - j\alpha X)$$

$$R_2 = H_1(Y - j\alpha X) + H_2(X + j\alpha Y)$$

si l'indice temporel du symbole OFDM/OQAM est impair (c'est-à-dire si $n_0$ est impair).

Pour simplifier le calcul dans cet exemple, on peut considérer sans perte de généralité que les valeurs des pilotes sont $Y = 0$ et $X = 1$.

Dans ce cas:

$$R_1 = H_1(X + j\alpha Y) + H_2(Y - j\alpha X) = H_1 - j\alpha H_2$$

$$R_2 = H_1(Y - j\alpha X) - H_2(X + j\alpha Y) = -(H_2 + j\alpha H_1)$$

soit en posant $R'_2 = -R_2$ :

$$R_1 + j\alpha R'_2 = H_1 - j\alpha H_2 + j\alpha H_2 - \alpha^2 H_1 = (1 - \alpha^2)H_1$$

$$R_1 - j\alpha R'_2 = H_2 + j\alpha H_1 - j\alpha H_1 - \alpha^2 H_2 = (1 - \alpha^2)H_2$$

ce qui permet de récupérer les coefficients de canal $H_1$ et $H_2$.

On peut notamment remarquer que quel que soit le nombre $N$ d'antennes d'émission et la répartition des pilotes dans la couronne de contour, les coefficients des équations pour récupérer les valeurs des pilotes dépendront des valeurs de la fonction d'ambiguïté aux points $(m.m_0, n.n_0,)$ avec $m$ et $n$ correspondant respectivement aux décalages en fréquence et en temps entre les éléments de données à protéger à l'intérieur de la couronne, cette fonction d'ambiguïté étant celle de la fonction OFDM/OQAM utilisée pour le modulateur (par exemple la fonction IOTA).

De plus pour simplifier les calculs dans le cas où le nombre d'antennes est grand ($N > 4$) on peut considérer les valeurs de la fonction d'ambiguïté aux points $(m.m_0, n.n_0,)$ avec $m$ et $n$ compris dans [-1, 0, 1] et les supposer nulles ailleurs. On peut également remarquer que pour toutes les fonctions utilisées en OFDM/OQAM, la fonction d'ambiguïté s'annule par construction aux points $(2m.m_0, 2n.n_0)$.

Par exemple, si l'on considère de nouveau l'exemple illustré en figure 4, selon lequel on transmet deux pilotes $X_1$ sur la première antenne d'émission 41 et deux pilotes $X_2$ sur la seconde antenne d'émission 42, et, pour chaque antenne d'émission, on transmet des porteuses portant la valeur nulle ($Y = 0$) aux deux positions correspondant, dans l'espace temps-fréquence, aux emplacements des pilotes de l'autre antenne, on obtient en réception :

$$R_1 = H_1(1 + j\alpha) + j\alpha H_2$$

$$R_2 = H_1(1 - j\alpha) - j\alpha H_2$$

$$R_3 = H_2(1 + j\alpha) + j\alpha H_1$$

$$R_4 = H_2(1 - j\alpha) - j\alpha H_1$$

en considérant $R_1$ la valeur reçue à l'emplacement ($m_0$-1, $n_0$), $R_2$ la valeur reçue à l'emplacement ($m_0$, $n_0$+1), $R_3$ la valeur reçue à l'emplacement ($m_0$+1, $n_0$), et $R_4$ la valeur reçue à l'emplacement ($m_0$, $n_0$-1).

On obtient donc :

$$X_1 = R_1(1 - j\alpha) + R_2(1 + j\alpha) = 2(1 + \alpha^2)H_1 + 2\alpha^2 H_2$$

$$X_2 = R_3(1 - j\alpha) + R_4(1 + j\alpha) = 2(1 + \alpha^2)H_2 + 2\alpha^2 H_1$$

et :

$$2\alpha^2 X_2 - 2(1 + \alpha^2)X_1 = 4(1 + 2\alpha^2)H_1$$

$$2\alpha^2 X_1 - 2(1 + \alpha^2)X_2 = 4(1 + 2\alpha^2)H_2$$

Si les bruits reçus aux différentes positions $R_i$ valent $b_i$, pour $1 \leq i \leq 4$ , on aura pour la première équation :

$$2\alpha^2 X_2 - 2(1+\alpha^2)X_1 =$$

$$4(1+2\alpha^2)H_1 - 2(1+\alpha^2)\big((1-j\alpha)b_1 + (1+j\alpha)b_2\big) + 2\alpha^2\big((1-j\alpha)b_3 + (1+j\alpha)b_4\big)$$

Le rapport signal à bruit est donc amélioré car on a :

$$4(1+2\alpha^2) > 2\cdot\sqrt{(1+\alpha^2)\cdot(2+8\alpha^2+16\alpha^4)}$$

Le second terme correspond à la puissance de bruit résultante pour une puissance pilote émise par antenne normalisée à 1. C'est pourquoi, comme on a deux pilotes par antenne, on a multiplié cette puissance par 2.

On présente désormais, en relation avec la figure 5, la structure matérielle d'un système de transmission d'un signal à porteuses multiples mettant en oeuvre la méthode décrite ci-dessus.

Un tel système de transmission comprend une mémoire $M_e$ 51, une unité de traitement $P_e$ 50, équipée par exemple d'un microprocesseur $\mu P_e$, et pilotée par le programme d'ordinateur $Pg_e$ 52.

A l'initialisation, les instructions de code du programme d'ordinateur 52 sont par exemple chargées dans une mémoire RAM avant d'être exécutées par le processeur de l'unité de traitement 50. L'unité de traitement 50 reçoit en entrée des symboles 53 constitués d'un ensemble d'éléments de données comprenant des pilotes et des éléments de données informatifs.

Le microprocesseur $\mu P_e$ de l'unité de traitement 50 met en oeuvre les étapes du procédé de transmission décrites précédemment, selon les instructions du programme $Pg_e$ 52. L'unité de traitement 50 délivre en sortie un signal multiporteuse 54 comprenant un ensemble d'au moins deux éléments de données à protéger séparés par au plus une porteuse en temps et/ou en fréquence, au moins une valeur étant attribuée à au moins un élément de données d'une couronne de contour constituée des porteuses directement voisines des éléments de données à protéger, pour réduire, en réception, une interférence affectant les éléments de données à protéger.

On présente finalement, en relation avec la figure 6, la structure matérielle d'un système de réception d'un signal à porteuses multiples mettant en oeuvre la technique d'estimation du canal décrite ci-dessus.

Un tel système de réception comprend une mémoire $M_r$ 61, une unité de traitement $P_r$ 60, équipée par exemple d'un microprocesseur $\mu P_r$, et pilotée par le programme d'ordinateur $Pg_r$ 62.

A l'initialisation, les instructions de code du programme d'ordinateur 62 sont par exemple chargées dans une mémoire RAM avant d'être exécutées par le processeur de l'unité de traitement 60. L'unité de traitement 60 reçoit en entrée un signal multiporteuse 64 comprenant un ensemble d'au moins deux éléments de données à protéger séparés par au plus une porteuse en temps et/ou en fréquence, au moins une valeur étant attribuée à au moins un élément de données d'une couronne de contour constituée des porteuses directement voisines des éléments de données à protéger, pour réduire, en réception, une interférence affectant les éléments de données à protéger.

Le microprocesseur $\mu P_r$ de l'unité de traitement 60 met en oeuvre les étapes du procédé de réception décrites précédemment, à savoir une étape d'estimation de la fonction de transfert du canal de transmission, à partir d'au moins certains des éléments de données à protéger, et une étape de récupération des éléments de données de la couronne de contour, selon les instructions du programme $Pg_r$ 62.

L'unité de traitement 60 délivre en sortie une estimation 64 des éléments de données informatifs du signal multiporteuse.

## ANNEXE 1

### INTERFERENCE INTRINSEQUE : SANS CANAL DE PROPAGATION

### *1. L'OFDM classique*

Dans le cadre d'une transmission mettant en oeuvre une modulation OFDM classique avec intervalle de garde, on émet des symboles à valeurs complexes $c_{m,n}$ ($m$ étant l'indice de la sous-porteuse et $n$ l'indice temporel).

Le signal émis peut être écrit sous la forme suivante :

$$s(t) = \sum_{n}\sum_{m=0}^{M-1} c_{m,n} g_{m,n}(t)$$

avec $g_{m,n}(t)$ qui sont les versions décalées en temps et en fréquence de la fonction prototype $g(t)$.

Dans le cadre d'une modulation de type OFDM classique, on a $g(t) = 1_{[0.Ts+\Delta[}$ et par conséquent :

$$g_{m,n}(t) = 1_{[n(Ts+\Delta),(n+1)(Ts+\Delta)[}e^{-2jm\pi\upsilon_0 t}$$

En OFDM classique, on a une orthogonalité complexe entre les porteuses ce qui signifie que :

$$\int_{\Re} g_{m,n}(t)g^*_{m_0,n_0}(t)dt = \delta_{m,m_0}\delta_{n,n_0}$$

En réception, on obtient bien (en utilisant un algorithme de transformée rapide de Fourier FFT) dans le cas où l'on n'a pas de canal de propagation :

$$\int_{\Re} s(t)g^*_{m_0,n_0}(t)dt = c_{m_0,n_0}$$

### 2. L'OFDM/OQAM

On se place désormais dans le cadre d'une transmission mettant en oeuvre une modulation OFDM/OQAM, et notamment la fonction prototype IOTA.

On transmet alors des données à valeurs réelles $a_{m,n}$ à un rythme $t_0$ deux fois plus élevé qu'en OFDM classique. L'efficacité spectrale en nombre de symboles complexes équivalents est donc la même qu'en OFDM classique sans intervalle de garde.

Autrement dit, pour un même espace inter-porteuse $\upsilon_0$, on transmet en OFDM/OQAM une valeur réelle par sous-porteuse tous les $\tau_0$, et en OFDM classique sans intervalle de garde une valeur complexe (soit l'équivalent de deux valeurs réelles) tous les $2\tau_0$. La quantité d'information transmise est donc identique.

Par conséquent, l'efficacité spectrale de l'OFDM/OQAM est $(Tg+2\tau_0)/2\tau_0$ fois supérieure à celle de l'OFDM avec un intervalle de garde de durée Tg.

En reprenant la même représentation du signal que précédemment, le signal OFDM/OQAM transmis peut s'écrire :

$$s(t) = \sum_n \sum_{m=0}^{M-1} a_{m,n} \underbrace{i^{m+n}e^{2i\pi m\upsilon_0 t}g(t-n\tau_0)}_{g_{m,n}(t)}$$

où $a_{m,n}$ sont les symboles réels (Offset QAM) envoyés sur la $m^{\text{ième}}$ sous porteuse au $n^{\text{ième}}$ temps symbole, M est le nombre de sous porteuses, $\upsilon_0$ est l'espacement inter-porteuse, $\tau_0$ représente la durée d'un symbole OFDM/OQAM, et g est la fonction prototype. La fonction $g(t)$ peut notamment être la fonction prototype Iota, ou toute autre fonction pouvant garantir les conditions d'orthogonalité réelle et de reconstruction parfaite.

On rappelle que la fonction prototype modulant chaque sous-porteuse doit être précisément localisée dans le domaine temporel pour limiter l'interférence entre symboles, et précisément localisée dans le domaine fréquentiel pour limiter l'interférence entre porteuses (due à l'effet Doppler, au bruit de phase...). Cette fonction doit aussi garantir l'orthogonalité entre les sous-porteuses.

L'orthogonalité entre les fonctions décalées en temps et en fréquence de la fonction prototype est garantie si :

$$\Re e\left( \int_{\Re} g_{m,n}(t).g^*_{m_0,n_0}(t)dt \right) = \delta_{m,m_0}\delta_{n,n_0}$$

A la réception du signal, dans le cas où l'on n'a pas de canal de propagation, on a bien :

$$\Re e\left(\int_{\Re} s(t)g^{*}_{m_0,n_0}(t)dt\right) = a_{m_0,n_0}$$

mais :

$$\int_{\Re} s(t)g^{*}_{m_0,n_0}(t)dt = a_{m_0,n_0} + \sum_{(m,n)\neq(m_0,n_0)} a_{m,n}\int_{\Re} g_{m,n}(t)g_{m_0,n_0}(t)dt$$

$$\int_{\Re} s(t)g^{*}_{m_0,n_0}(t)dt = a_{m_0,n_0} + I_{m_0,n_0} \quad .$$

Le terme $I_{m_0,n_0}$ représente l'interférence intrinsèque et cette interférence dépend des autres données $a_{m,n}$ émises. On peut montrer que $I_{m_0,n_0}$ dépend principalement des huit porteuses voisines de $g_{m_0,n_0}$.

Si on appelle $C^{1}_{m_0,n_0}$ l'interférence due à ces huit porteuses, on peut écrire :

$$C^{1}_{m_0,n_0} = \sum_{(m,n)\in\Omega^{1}_{m_0,n_0}} a_{m,n}\int_{\Re} g_{m,n}(t)g^{*}_{m_0,n_0}(t)dt$$

avec $\Omega^{1}_{m_0,n_0}$ qui représente l'ensemble des indices des porteuses voisines.

Pour l'estimation de canal en OFDM/IOTA on introduit dans le document de brevet FR 2 814 302 une relation entre les huit porteuses entourant le pilote pour éliminer localement (et presque totalement) cette interférence intrinsèque.

La relation à satisfaire est la suivante :

$$\alpha\left((-1)^{n_0}\left(a_{m_0+1,n_0} - a_{m_0-1,n_0}\right) + \left(a_{m_0,n_0+1} - a_{m_0,n_0-1}\right)\right)$$

$$-\beta(-1)^{n_0}\left(a_{m_0+1,n_0+1} + a_{m_0-1,n_0+1} + a_{m_0+1,n_0-1} + a_{m_0-1,n_0-1}\right) = 0$$

Dans le cas spécifique de la fonction prototype IOTA on a $\alpha$ = - 0.4411 et $\beta$ = -0.2280.

On peut notamment remarquer que pour n'importe quelle porteuse $g_{m_0,n_0}$ en IOTA on a, avant de prendre la partie réelle, comme symboles reçus :

$$a_{m_0,n_0} + j\left(\begin{array}{l} \alpha\left((-1)^{n_0}\left(a_{m_0+1,n_0} - a_{m_0-1,n_0}\right) + \left(a_{m_0,n_0+1} - a_{m_0,n_0-1}\right)\right) \\ -\beta(-1)^{n_0}\left(a_{m_0+1,n_0+1} + a_{m_0-1,n_0+1} + a_{m_0+1,n_0-1} + a_{m_0-1,n_0-1}\right)\end{array}\right)$$

**ANNEXE 2**

**RAPPELS SUR LA FONCTION D'AMBIGUÏTE**

*1. Définition*

Soit $x(t)$ une fonction paire et $X(f)$ sa transformée de Fourier. On note :

$$A_x(\tau, \nu) = \int_{-\infty}^{+\infty} x(t + \frac{\tau}{2}) . x^*(t - \frac{\tau}{2}) . e^{-2i\pi\nu t} dt$$

la fonction d'ambiguïté de $x$.

De plus, on a :

$$A_x(\tau, \nu) = \int_{-\infty}^{+\infty} X(f + \frac{\nu}{2}) . X^*(f - \frac{\nu}{2}) . e^{-2i\pi\tau f} df$$

*Propriété* : $x(t)$ paire $\rightarrow A_x(t,n)$ réelle.

*2. Cas d'un réseau OFDM/OQAM*

Dans le cas d'un réseau OFDM/OQAM de densité 2, les fonctions $x_{m,n}(t)$ sont de la forme suivante :

$$x_{m,n}(t) = i^{m+n} e^{2i\pi m\nu_0 t} x(t - n\tau_0)$$

et dans ce cas :

$$\langle x_{m,n} | x_{m',n'} \rangle = \int_{-\infty}^{+\infty} i^{(m-m')+(n-n')} e^{2i\pi(m-m')\nu_0 t} x(t - n\tau_0) x^*(t - n'\tau_0) dt$$

Comme en OFDM/OQAM la fonction $x(t)$ est paire, la fonction $A_x(t,n)$ est réelle. Le produit scalaire entre $x_{m,n}(t)$ et $x_{m',n}(t)$ sera donc réel si et seulement si $(m - m')$ et $(n - n')$ sont pairs. Sinon il est imaginaire pur.

Pour satisfaire la condition d'orthogonalité réelle en OFDM/OQAM on a donc besoin d'avoir une fonction $x(t)$ qui satisfasse pour tout couple $(m,n) \neq (0,0)$ :

$$A_x(2n\tau_0, 2m\nu_0) = 0$$

On peut calculer la valeur de l'interférence pour certains points particuliers.

*3. Calcul de l'interférence*

Sur deux symboles décalés en temps, on a :

$$\langle x_{m_0,n_0} | x_{m_0,n_0+1} \rangle = \int_{-\infty}^{+\infty} i^{(n_0-n_0-1)} x(t - n_0\tau_0) x^*(t - (n_0 + 1)\tau_0) dt$$

$$\left\langle x_{m_0,n_0} \middle| \dot{x}_{m_0,n_0+1} \right\rangle = -i \int_{-\infty}^{+\infty} x(t - n_0\tau_0) x^*(t - (n_0+1)\tau_0) dt$$

$$\left\langle x_{m_0,n_0} \middle| \dot{x}_{m_0,n_0+1} \right\rangle = -i \int_{-\infty}^{+\infty} x(t + \tau_0/2) x(t - \tau_0/2) dt$$

et :

$$\left\langle \dot{x}_{m_0,n_0+1} \middle| x_{m_0,n_0} \right\rangle = \int_{-\infty}^{+\infty} i^{(n_0+1-n_0)} x(t - (n_0+1)\tau_0) x^*(t - n_0 + 1\tau_0) dt$$

$$\left\langle x_{m_0,n_0+1} \middle| x_{m_0,n_0} \right\rangle = i \int_{-\infty}^{+\infty} x(t - (n_0+1)\tau_0) x^*(t - n_0\tau_0) dt$$

$$\left\langle \dot{x}_{m_0,n_0+1} \middle| x_{m_0,n_0} \right\rangle = i \int_{-\infty}^{+\infty} x(t + \tau_0/2) x(t - \tau_0/2) dt = -\left\langle x_{m_0,n_0} \middle| x_{m_0,n_0+1} \right\rangle$$

en utilisant le fait que $x(t)$ est réelle.

Sur deux symboles décalés en fréquence, on a :

$$\left\langle x_{m_0,n_0} \middle| x_{m_0+1,n_0} \right\rangle = \int_{-\infty}^{+\infty} i^{(m_0-m_0-1)} e^{2i\pi(m_0-m_0-1)v_0 t} x(t - n_0\tau_0) x^*(t - n_0\tau_0) dt$$

$$\left\langle x_{m_0,n_0} \middle| x_{m_0+1,n_0} \right\rangle = -i \int_{-\infty}^{+\infty} e^{-2i\pi v_0 t} x(t - n_0\tau_0) x^*(t - n_0\tau_0) dt$$

Avec le changement de variable $t' = t - n_0 t_0$ on obtient :

$$\left\langle x_{m_0,n_0} \middle| x_{m_0+1,n_0} \right\rangle = -i \int_{-\infty}^{+\infty} e^{-2i\pi v_0 (t + n_0\tau_0)} x(t) x^*(t) dt$$

$$\left\langle x_{m_0,n_0} \middle| x_{m_0+1,n_0} \right\rangle = -i e^{-2i\pi v_0 n_0\tau_0} \int_{-\infty}^{+\infty} e^{-2i\pi v_0 t} x(t) x^*(t) dt$$

$$\left\langle x_{m_0,n_0} \middle| x_{m_0+1,n_0} \right\rangle = -i e^{-i\pi n_0} \int_{-\infty}^{+\infty} e^{-2i\pi v_0 t} x(t) x^*(t) dt$$

car $t_0 n_0 = 1/2$.

On a donc :

$$\left\langle x_{m_0,n_0} \middle| x_{m_0+1,n_0} \right\rangle = -i(-1)^{n_0} \int_{-\infty}^{+\infty} e^{-2i\pi v_0 t} x(t) x^*(t) dt$$

En utilisant les mêmes équations, on obtient :

$$\left\langle x_{m_0+1,n_0} \middle| x_{m_0,n_0} \right\rangle = \int_{-\infty}^{+\infty} i^{(m_0+1-m_0)} e^{2i\pi(m_0+1-m_0)\nu_0 t} x(t-n_0\tau_0)x^*(t-n_0\tau_0)dt$$

$$\left\langle x_{m_0+1,n_0} \middle| x_{m_0,n_0} \right\rangle = i\int_{-\infty}^{+\infty} e^{+2i\pi\nu_0 t} x(t-n_0\tau_0)x^*(t-n_0\tau_0)dt$$

soit avec le changement de variable $t' = t - n_0 t_0$, et considérant $t_0 n_0 = 1/2$ :

$$\left\langle x_{m_0+1,n_0} \middle| x_{m_0,n_0} \right\rangle = i\int_{-\infty}^{+\infty} e^{2i\pi\nu_0(t+n_0\tau_0)} x(t)x^*(t)dt$$

$$\left\langle x_{m_0+1,n_0} \middle| x_{m_0,n_0} \right\rangle = ie^{2i\pi\nu_0 n_0\tau_0}\int_{-\infty}^{+\infty} e^{2i\pi\nu_0 t} x(t)x^*(t)dt$$

$$\left\langle x_{m_0+1,n_0} \middle| x_{m_0,n_0} \right\rangle = ie^{i\pi n_0}\int_{-\infty}^{+\infty} e^{2i\pi\nu_0 t} x(t)x^*(t)dt$$

On a donc :

$$\left\langle x_{m_0+1,n_0} \middle| x_{m_0,n_0} \right\rangle = i(-1)^{n_0}\int_{-\infty}^{+\infty} e^{2i\pi\nu_0 t} x(t)x^*(t)dt$$

Avec le changement de variable $t' = -t$ on obtient :

$$\left\langle x_{m_0+1,n_0} \middle| x_{m_0,n_0} \right\rangle = i(-1)^{n_0}\int_{-\infty}^{+\infty} e^{-2i\pi\nu_0 t'} x(-t')x^*(-t')dt$$

et comme $x(t)$ est paire :

$$\left\langle x_{m_0+1,n_0} \middle| x_{m_0,n_0} \right\rangle = i(-1)^{n_0}\int_{-\infty}^{+\infty} e^{-2i\pi\nu_0 t} x(t)x^*(t)dt = -\left\langle x_{m_0,n_0} \middle| x_{m_0+1,n_0} \right\rangle$$

Finalement, en utilisant les mêmes équations, on obtient :

$$\left\langle x_{m_0,n_0} \middle| x_{m_0+1,n_0+1} \right\rangle = \int_{-\infty}^{+\infty} i^{(m_0-m_0-1)+(n_0-n_0-1)} e^{2i\pi(m_0-m_0-1)\nu_0 t} x(t-n_0\tau_0)x^*(t-(n_0+1)\tau_0)$$

$$\left\langle x_{m_0,n_0} \middle| x_{m_0+1,n_0+1} \right\rangle = -\int_{-\infty}^{+\infty} e^{-2i\pi\nu_0 t} x(t-n_0\tau_0)x^*(t-(n_0+1)\tau_0)dt$$

En utilisant de nouveau le même changement de variable $t' = t - n_0 t_0$, et considérant $t_0 n_0 = 1/2$ on obtient :

$$\left\langle x_{m_0,n_0} \middle| x_{m_0+1,n_0+1} \right\rangle = -e^{-2i\pi\nu_0 n_0\tau_0}\int_{-\infty}^{+\infty} e^{-2i\pi\nu_0 t} x(t)x^*(t-\tau_0)dt$$

$$\left\langle x_{m_0,n_0} \middle| x_{m_0+1,n_0+1} \right\rangle = -(-1)^{n_0} \int_{-\infty}^{+\infty} e^{-2i\nu_0 t} x(t) x^*(t - \tau_0) dt$$

$$\left\langle x_{m_0,n_0} \middle| x_{m_0+1,n_0+1} \right\rangle = -(-1)^{n_0} \int_{-\infty}^{+\infty} e^{-2i\nu_0 t} x(t) x(t - \tau_0) dt$$

$$\left\langle x_{m_0,n_0} \middle| x_{m_0+1,n_0+1} \right\rangle = -(-1)^{n_0} \int_{-\infty}^{+\infty} e^{-2i\pi\nu_0 t} x(t) x(t - \tau_0) dt$$

De même, on a :

$$\left\langle x_{m_0+1,n_0+1} \middle| x_{m_0,n_0} \right\rangle = \int_{-\infty}^{+\infty} i^{(m_0+1-m_0)+(n_0+1-n_0)} e^{2i\pi(m_0+1-m_0)\nu_0 t} x(t - (n_0+1)\tau_0) x^*(t - n_0\tau_0)$$

$$\left\langle x_{m_0+1,n_0+1} \middle| x_{m_0,n_0} \right\rangle = -\int_{-\infty}^{+\infty} e^{2i\pi\nu_0 t} x(t - n_0\tau_0) x^*(t - (n_0+1)\tau_0) dt$$

Avec le changement de variable $t' = t - n_0 t_0$ on obtient :

$$\left\langle x_{m_0+1,n_0+1} \middle| x_{m_0,n_0} \right\rangle = -e^{2i\pi\nu_0 n_0 \tau_0} \int_{-\infty}^{+\infty} e^{2i\pi\nu_0 t} x(t - \tau_0) x^*(t) dt$$

$$\left\langle x_{m_0+1,n_0+1} \middle| x_{m_0,n_0} \right\rangle = -(-1)^{n_0} \int_{-\infty}^{+\infty} e^{2i\pi\nu_0 t} x(t - \tau_0) x(t) dt$$

Avec le changement de variable $t' = -t$, on obtient :

$$\left\langle x_{m_0+1,n_0+1} \middle| x_{m_0,n_0} \right\rangle = -(-1)^{n_0} \int_{-\infty}^{+\infty} e^{-2i\pi\nu_0 t} x(-t - \tau_0) x(-t) dt$$

et comme x(t) est paire :

$$\left\langle x_{m_0+1,n_0+1} \middle| x_{m_0,n_0} \right\rangle = -(-1)^{n_0} \int_{-\infty}^{+\infty} e^{-2i\pi\nu_0 t} x(t + \tau_0) x(t) dt$$

Avec le changement de variable $t' = t + t_0$ on obtient :

$$\left\langle x_{m_0+1,n_0+1} \middle| x_{m_0,n_0} \right\rangle = -(-1)^{n_0} \int_{-\infty}^{+\infty} e^{2i\pi\nu_0 \tau_0} e^{-2i\pi\nu_0 t} x(t) x(t - \tau_0) dt$$

et comme $t_0 n_0 = 1/2$ :

$$\left\langle x_{m_0+1,n_0+1} \middle| x_{m_0,n_0} \right\rangle = (-1)^{n_0} \int_{-\infty}^{+\infty} e^{-2i\pi v_0 t} x(t) x(t-\tau_0) dt = -\left\langle x_{m_0+1,n_0+1} \middle| x_{m_0+1,n_0+1} \right\rangle$$

**Revendications**

**1.** Procédé de transmission d'un signal multiporteuse formé d'une succession temporelle de symboles constitués d'un ensemble d'éléments de données, chacun desdits éléments de données modulant une fréquence porteuse dudit signal, lesdits éléments de données comprenant d'une part des éléments de données de référence appelés pilotes, la valeur à l'émission d'au moins certains desdits pilotes étant connue d'au moins un récepteur destiné à effectuer une réception dudit signal, et d'autre part des éléments de données informatifs, la valeur à l'émission desdits éléments de données informatifs n'étant pas connue a priori du ou desdits récepteur(s),
une desdites fréquences porteuses modulée à un instant donné par un desdits éléments de données étant appelée porteuse,
ledit procédé mettant en oeuvre :

- une étape de calcul d'une interférence affectant un ensemble d'au moins deux éléments de données à protéger, lesdits éléments de données à protéger étant espacés deux à deux d'au plus une porteuse en temps et d'au plus une porteuse en fréquence, ladite interférence tenant compte de la valeur desdits éléments de données à protéger et des valeurs des éléments de données d'une couronne de contour constituée desdites porteuses directement voisines desdits éléments de données à protéger ; et
- une étape de détermination d'au moins une valeur à attribuer à au moins un élément de données de ladite couronne de contour, pour réduire, en réception, ladite interférence calculée.

**2.** Procédé de transmission d'un signal multiporteuse selon la revendication 1, dans lequel chacun desdits éléments de données à protéger étant entouré par une couronne de proximité constituée desdites porteuses directement voisines dudit élément de données à protéger, lesdites étapes de calcul et de détermination sont mises en oeuvre sous la forme d'au moins une itération des sous-étapes suivantes :

- calcul d'une interférence partielle affectant un desdits éléments de données à protéger, ladite interférence partielle tenant compte de la valeur dudit élément de données à protéger et des valeurs des éléments de données de ladite couronne de proximité entourant ledit élément de données à protéger ; et
- détermination d'au moins une valeur à attribuer à au moins un élément de données de ladite couronne de proximité n'appartenant pas audit ensemble d'éléments de données à protéger, pour réduire, en réception, ladite interférence partielle calculée,

une itération suivante tenant compte des valeurs attribuées lors d'une itération courante,
de façon à déterminer les valeurs à attribuer à au moins un élément de données de ladite couronne de contour.

**3.** Procédé de transmission d'un signal multiporteuse selon l'une quelconque des revendications 1 et 2, dans lequel ledit signal étant émis par une première source et appelé premier signal, lesdits éléments de données à protéger comprennent :

- un premier ensemble d'au moins un pilote dudit premier signal ;
- un second ensemble d'au moins un élément de données à protéger positionné dans l'espace temps-fréquence, à au moins un emplacement correspondant à l'emplacement d'au moins un pilote d'au moins un deuxième signal multiporteuse, émis par au moins une deuxième source, et présentant la même structure que ledit premier signal.

**4.** Procédé de transmission d'un signal multiporteuse selon la revendication 3, dans lequel les éléments de données à protéger dudit second ensemble sont des éléments de données informatifs, lesdits éléments de données à protéger desdits premier et second ensembles formant une séquence orthogonale à chaque séquence dudit au moins un deuxième signal positionnée aux emplacements correspondants dans l'espace temps/fréquence.

**5.** Procédé de transmission selon l'une quelconque des revendications 1 à 4, dans lequel ledit signal multiporteuse est de type OFDM/OQAM.

6. Signal multiporteuse formé d'une succession temporelle de symboles constitués d'un ensemble d'éléments de données, chacun desdits éléments de données modulant une fréquence porteuse dudit signal, lesdits éléments de données comprenant d'une part des éléments de données de référence appelés pilotes, la valeur à l'émission d'au moins certains desdits pilotes étant connue d'au moins un récepteur destiné à effectuer une réception dudit signal, et d'autre part des éléments de données informatifs, la valeur à l'émission desdits éléments de données informatifs n'étant pas connue a priori du ou desdits récepteur(s),
une desdites fréquences porteuses modulée à un instant donné par un desdits éléments de données étant appelée porteuse,
ledit signal comprenant un ensemble d'au moins deux éléments de données à protéger, lesdits éléments de données à protéger étant espacés deux à deux d'au plus une porteuse en temps et d'au plus une porteuse en fréquence,
au moins une valeur étant attribuée à au moins un élément de données d'une couronne de contour constituée desdites porteuses directement voisines desdits éléments de données à protéger, pour réduire, en réception, une interférence affectant lesdits éléments de données à protéger,
ladite interférence tenant compte de la valeur desdits éléments de données à protéger et des valeurs des éléments de données de ladite couronne de contour.

7. Procédé de réception d'un signal multiporteuse formé d'une succession temporelle de symboles constitués d'un ensemble d'éléments de données, chacun desdits éléments de données modulant une fréquence porteuse dudit signal, lesdits éléments de données comprenant d'une part des éléments de données de référence appelés pilotes, la valeur à l'émission d'au moins certains desdits pilotes étant connue d'au moins un récepteur destiné à effectuer une réception dudit signal, et d'autre part des éléments de données informatifs, la valeur à l'émission desdits éléments de données informatifs n'étant pas connue a priori du ou desdits récepteur(s),
une desdites fréquences porteuses modulée à un instant donné par un desdits éléments de données étant appelée porteuse,
ledit signal reçu comprenant un ensemble d'au moins deux éléments de données à protéger, lesdits éléments de données à protéger étant espacés deux à deux d'au plus une porteuse en temps et d'au plus une porteuse en fréquence, un traitement étant effectué avant émission sur ledit signal de façon à attribuer au moins une valeur à au moins un élément de données d'une couronne de contour constituée desdites porteuses directement voisines desdits éléments de données à' protéger pour réduire une interférence affectant lesdits éléments de données à protéger,
ledit procédé met en oeuvre :

- une étape d'estimation de la fonction de transfert d'un canal de transmission, à partir d'au moins certains desdits éléments de données à protéger ; et
- une étape de récupération desdits éléments de données de ladite couronne de contour mettant en oeuvre un traitement inverse dudit traitement effectué avant émission.

8. Dispositif d'émission d'un signal multiporteuse formé d'une succession temporelle de symboles constitués d'un ensemble d'éléments de données, chacun desdits éléments de données modulant une fréquence porteuse dudit signal, lesdits éléments de données comprenant d'une part des éléments de données de référence appelés pilotes, la valeur à l'émission d'au moins certains desdits pilotes étant connue d'au moins un récepteur destiné à effectuer une réception dudit signal, et d'autre part des éléments de données informatifs, la valeur à l'émission desdits éléments de données informatifs n'étant pas connue a priori du ou desdits récepteur(s),
une desdites fréquences porteuses modulée à un instant donné par un desdits éléments de données étant appelée porteuse, ledit dispostif comprenant

- des moyens de calcul d'une interférence affectant un ensemble d'au moins deux éléments de données à protéger, lesdits éléments de données à protéger étant espacés deux à deux d'au plus une porteuse en temps et d'au plus une porteuse en fréquence, ladite interférence tenant compte de la valeur desdits éléments de données à protéger et des valeurs des éléments de données d'une couronne de contour constituée desdites porteuses directement voisines desdits éléments de données à protéger ; et
- des moyens de détermination d'au moins une valeur à attribuer à au moins un élément de données de ladite couronne de contour, pour réduire, en réception, ladite interférence calculée.

9. Dispositif de réception d'un signal multiporteuse formé d'une succession temporelle de symboles constitués d'un ensemble d'éléments de données, chacun desdits éléments de données modulant une fréquence porteuse dudit signal, lesdits éléments de données comprenant d'une part des éléments de données de référence appelés pilotes, la valeur à l'émission d'au moins certains desdits pilotes étant connue d'au moins un récepteur destiné à effectuer une réception dudit signal, et d'autre part des éléments de données informatifs, la valeur à l'émission desdits éléments de données informatifs n'étant pas connue a priori du ou desdits récepteur(s),

une desdites fréquences porteuses modulée à un instant donné par un desdits éléments de données étant appelée porteuse,

ledit signal reçu comprenant un ensemble d'au moins deux éléments de données à protéger, lesdits éléments de données à protéger étant espacés deux à deux d'au plus une porteuse en temps et d'au plus une porteuse en fréquence,

un traitement étant effectué avant émission sur ledit signal de façon à attribuer au moins une valeur à au moins un élément de données d'une couronne de contour constituée desdites porteuses directement voisines desdits éléments de données à protéger pour réduire une interférence affectant lesdits éléments de données à protéger, ledit dispositif comprend :

- des moyens d'estimation de la fonction de transfert d'un canal de transmission, à partir d'au moins certains desdits éléments de données à protéger ; et
- des moyens de récupération desdits éléments de données de ladite couronne de contour mettant en oeuvre un traitement inverse dudit traitement effectué avant émission.

**10.** Produit programme d'ordinateur téléchargeable depuis un réseau de communication et/ou stocké sur un support lisible par ordinateur et/ou exécutable par un microprocesseur, ledit programme comprenant des instructions de code de programme pour la mise en oeuvre de l'une au moins des revendications 1 à 5.

**11.** Produit programme d'ordinateur téléchargeable depuis un réseau de communication et/ou stocké sur un support lisible par ordinateur et/ou exécutable par un microprocesseur, ledit programme comprenant des instructions de code de programme pour la mise en oeuvre de la revendication 7.

**Claims**

**1.** Method for transmitting a multicarrier signal formed by a temporal succession of symbols consisting of a set of data elements, each of said data elements modulating a carrier frequency of said signal, said data elements comprising on the one hand reference data elements called pilots, the value upon sending of at least some of said pilots being known to at least one receiver intended to perform a reception of said signal, and on the other hand informational data elements, the value upon sending of said informational data elements not being known a priori to said receiver or receivers,

one of said carrier frequencies modulated at an instant which is given by one of said data elements being called a carrier,

said method implementing:

- a step of calculating an interference affecting a set of at least two data elements to be protected, said data elements to be protected being spaced apart pairwise by at most one carrier time-wise and by at most one carrier frequency-wise,

said interference taking account of the value of said data elements to be protected and of the values of the data elements of a contour ring consisting of said carriers directly neighbouring said data elements to be protected; and

- a step of determining at least one value to be allocated to at least one data element of said contour ring, so as to reduce, at reception, said calculated interference.

**2.** Method for transmitting a multicarrier signal according to Claim 1, in which each of said data elements to be protected being surrounded by a proximity ring consisting of said carriers directly neighbouring said data element to be protected, said calculation and determination steps are implemented in the form of at least one iteration of the following sub-steps:

- calculation of a partial interference affecting one of said data elements to be protected, said partial interference taking account of the value of said data element to be protected and of the values of the data elements of said proximity ring surrounding said data element to be protected; and

- determination of at least one value to be allocated to at least one data element of said proximity ring not belonging to said set of data elements to be protected, so as to reduce, at reception, said calculated partial interference,

a following iteration taking account of the values allocated during a current iteration,
in such a way as to determine the values to be allocated to at least one data element of said contour ring.

3. Method for transmitting a multicarrier signal according to any one of Claims 1 and 2, in which said signal being sent by a first source and called the first signal, said data elements to be protected comprise:

- a first set of at least one pilot of said first signal;
- a second set of at least one data element to be protected positioned in the time-frequency space, at at least one location corresponding to the location of at least one pilot of at least one second multicarrier signal, sent by at least one second source, and exhibiting the same structure as said first signal.

4. Method for transmitting a multicarrier signal according to Claim 3, in which the data elements to be protected of said second set are informational data elements, said data elements to be protected of said first and second sets forming a sequence orthogonal to each sequence of said at least one second signal positioned at the corresponding locations in the time/frequency space.

5. Method of transmission according to any one of Claims 1 to 4, in which said multicarrier signal is of OFDM/OQAM type.

6. Multicarrier signal formed by a temporal succession of symbols consisting of a set of data elements, each of said data elements modulating a carrier frequency of said signal, said data elements comprising on the one hand reference data elements called pilots, the value upon sending of at least some of said pilots being known to at least one receiver intended to perform a reception of said signal, and on the other hand informational data elements, the value upon sending of said informational data elements not being known a priori to said receiver or receivers,
one of said carrier frequencies modulated at an instant which is given by one of said data elements being called a carrier,
said signal comprising a set of at least two data elements to be protected, said data elements to be protected being spaced apart pairwise by at most one carrier time-wise and by at most one carrier frequency-wise, at least one value being allocated to at least one data element of a contour ring consisting of said carriers directly neighbouring said data elements to be protected, so as to reduce, at reception, an interference affecting said data elements to be protected,
said interference taking account of the value of said data elements to be protected and of the values of the data elements of said contour ring.

7. Method for receiving a multicarrier signal formed by a temporal succession of symbols consisting of a set of data elements, each of said data elements modulating a carrier frequency of said signal, said data elements comprising on the one hand reference data elements called pilots, the value upon sending of at least some of said pilots being known to at least one receiver intended to perform a reception of said signal, and on the other hand informational data elements, the value upon sending of said informational data elements not being known a priori to said receiver or receivers,
one of said carrier frequencies modulated at an instant which is given by one of said data elements being called a carrier,
said signal received comprising a set of at least two data elements to be protected, said data elements to be protected being spaced apart pairwise by at most one carrier time-wise and by at most one carrier frequency-wise, a processing being performed before sending on said signal so as to allocate at least one value to at least one data element of a contour ring consisting of said carriers directly neighbouring said data elements to be protected so as to reduce an interference affecting said data elements to be protected,
said method implements:

- a step of estimating the transfer function of a transmission channel, on the basis of at least some of said data elements to be protected; and
- a step of recovering said data elements of said contour ring implementing a processing inverse to said processing performed before sending.

8. Device for sending a multicarrier signal formed by a temporal succession of symbols consisting of a set of data elements, each of said data elements modulating a carrier frequency of said signal, said data elements comprising on the one hand reference data elements called pilots, the value upon sending of at least some of said pilots being known to at least one receiver intended to perform a reception of said signal, and on the other hand informational data elements, the value upon sending of said informational data elements not being known a priori to said receiver or receivers,

one of said carrier frequencies modulated at an instant which is given by one of said data elements being called a carrier,

said device comprising:

- means for calculating an interference affecting a set of at least two data elements to be protected, said data elements to be protected being spaced apart pairwise by at most one carrier time-wise and by at most one carrier frequency-wise, said interference taking account of the value of said data elements to be protected and of the values of the data elements of a contour ring consisting of said carriers directly neighbouring said data elements to be protected; and
- means for determining at least one value to be allocated to at least one data element of said contour ring, so as to reduce, at reception, said calculated interference.

9. Device for receiving a multicarrier signal formed by a temporal succession of symbols consisting of a set of data elements, each of said data elements modulating a carrier frequency of said signal, said data elements comprising on the one hand reference data elements called pilots, the value upon sending of at least some of said pilots being known to at least one receiver intended to perform a reception of said signal, and on the other hand informational data elements, the value upon sending of said informational data elements not being known a priori to said receiver or receivers,

one of said carrier frequencies modulated at an instant which is given by one of said data elements being called a carrier,

said signal received comprising a set of at least two data elements to be protected, said data elements to be protected being spaced apart pairwise by at most one carrier time-wise and by at most one carrier frequency-wise, a processing being performed before sending on said signal so as to allocate at least one value to at least one data element of a contour ring consisting of said carriers directly neighbouring said data elements to be protected so as to reduce an interference affecting said data elements to be protected,

said device comprises:

- means for estimating the transfer function of a transmission channel, on the basis of at least some of said data elements to be protected; and
- means for recovering said data elements of said contour ring implementing a processing inverse to said processing performed before sending.

10. Computer program product downloadable from a communication network and/or stored on a medium readable by computer and/or executable by a microprocessor, said program comprising program code instructions for the implementation of one at least of Claims 1 to 5.

11. Computer program product downloadable from a communication network and/or stored on a medium readable by computer and/or executable by a microprocessor, said program comprising program code instructions for the implementation of Claim 7.

**Patentansprüche**

1. Verfahren zur Übertragung eines Mehrträgersignals, das von einer zeitlichen Folge von Symbolen gebildet wird, die aus einer Gruppe von Datenelementen bestehen, wobei jedes der Datenelemente eine Trägerfrequenz des Signals moduliert, wobei die Datenelemente einerseits Piloten genannte Bezugs-Datenelemente enthalten, wobei der sendeseitige Wert mindestens bestimmter der Piloten mindestens einem Empfänger bekannt ist, der dazu bestimmt ist, einen Empfang des Signals durchzuführen, und andererseits informative Datenelemente enthalten, wobei der sendeseitige Wert der informativen Datenelemente dem oder den Empfänger(n) vorab nicht bekannt ist, wobei eine der Trägerfrequenzen, die zu einem gegebenen Zeitpunkt von einem der Datenelemente moduliert wird, Träger genannt wird,

wobei das Verfahren ausführt:

- einen Schritt der Berechnung einer Interferenz, die eine Gruppe von mindestens zwei zu schützenden Datenelementen betrifft, wobei die zu schützenden Datenelemente paarweise einen Abstand von höchstens einem Träger im Zeitbereich und höchstens einem Träger im Frequenzbereich haben, wobei die Interferenz den Wert der zu schützenden Datenelemente und die Werte der Datenelemente eines Konturkranzes berücksichtigt, der aus den Trägern besteht, die den zu schützenden Datenelementen direkt benachbart sind; und

- einen Schritt der Bestimmung mindestens eines Werts, der mindestens einem Datenelement des Konturkranzes zuzuweisen ist, um empfangsseitig die berechnete Interferenz zu reduzieren.

2. Verfahren zur Übertragung eines Mehrträgersignals nach Anspruch 1, bei dem jedes der zu schützenden Datenelemente von einem Näherungskranz umgeben ist, der aus den Trägern besteht, die dem zu schützenden Datenelement direkt benachbart sind, wobei die Schritte der Berechnung und der Bestimmung in Form mindestens einer Iteration der folgenden Unterschritte ausgeführt werden:

- Berechnung einer partiellen Interferenz, die eines der zu schützenden Datenelemente betrifft, wobei die partielle Interferenz den Wert des zu schützenden Datenelements und Werte der Datenelemente des Näherungskranzes berücksichtigt, der das zu schützende Datenelement umgibt; und

- Bestimmung mindestens eines Werts, der mindestens einem Datenelement des Näherungskranzes zuzuweisen ist, das nicht zur Gruppe von zu schützenden Datenelementen gehört, um empfangsseitig die berechnete partielle Interferenz zu reduzieren,

wobei eine folgende Iteration die bei einer laufenden Iteration zugewiesenen Werte berücksichtigt, um die mindestens einem Datenelement des Konturkranzes zuzuweisenden Werte zu bestimmen.

3. Verfahren zur Übertragung eines Mehrträgersignals nach einem der Ansprüche 1 und 2, bei dem das Signal von einer ersten Quelle gesendet und erstes Signal genannt wird, wobei die zu schützenden Datenelemente enthalten:

- eine erste Gruppe mindestens eines Piloten des ersten Signals;

- eine zweite Gruppe mindestens eines zu schützenden Datenelements, die im ZeitFrequenz-Raum an mindestens einer Stelle positioniert ist, die der Stelle mindestens eines Piloten mindestens eines zweiten Mehrträgersignals entspricht, die von mindestens einer zweiten Quelle gesendet wird und die gleiche Struktur wie das erste Signal hat.

4. Verfahren zur Übertragung eines Mehrträgersignals nach Anspruch 3, bei dem die zu schützenden Datenelemente der zweiten Gruppe informative Datenelemente sind, wobei die zu schützenden Datenelemente der ersten und der zweiten Gruppe eine orthogonale Folge zu jeder Folge des mindestens einen zweiten Signals bilden, die an den entsprechenden Stellen im Zeit/Frequenz-Raum positioniert ist.

5. Übertragungsverfahren nach einem der Ansprüche 1 bis 4, bei dem das Mehrträgersignal vom Typ OFDM/OQAM ist.

6. Mehrträgersignal, das von einer zeitlichen Folge von Symbolen gebildete wird, die aus einer Gruppe von Datenelementen bestehen, wobei jedes der Datenelemente eine Trägerfrequenz des Signals moduliert, wobei die Datenelemente einerseits Piloten genannte Bezugs-Datenelemente enthalten, wobei der sendeseitige Wert mindestens bestimmter der Piloten mindestens einem Empfänger bekannt ist, der dazu bestimmt ist, einen Empfang des Signals durchzuführen, und andererseits informative Datenelemente enthalten, wobei der sendeseitige Wert der informativen Datenelemente dem oder den Empfänger(n) vorab nicht bekannt ist, wobei eine der Trägerfrequenzen, die in einem gegebenen Zeitpunkt von einem der Datenelemente moduliert wird, Träger genannt wird, wobei das Signal eine Gruppe von mindestens zwei zu schützenden Datenelementen enthält, wobei die zu schützenden Datenelemente paarweise einen Abstand von höchstens einem Träger im Zeitbereich und höchstens einem Träger im Frequenzbereich haben, wobei mindestens ein Wert mindestens einem Datenelement eines Konturkranzes zugewiesen wird, der aus den Trägern besteht, die den zu schützenden Datenelementen direkt benachbart sind, um empfangsseitig eine die zu schützenden Datenelemente betreffende Interferenz zu reduzieren, wobei die Interferenz den Wert der zu schützenden Datenelemente und die Werte der Datenelemente des Konturkranzes berücksichtigt.

7. Verfahren zum Empfang eines Mehrträgersignals, das von einer zeitlichen Folge von Symbolen gebildet wird, die aus einer Gruppe von Datenelementen bestehen, wobei jedes der Datenelemente eine Trägerfrequenz des Signals moduliert, wobei die Datenelemente einerseits Piloten genannte Bezugs-Datenelemente enthalten, wobei der sendeseitige Wert mindestens bestimmter der Piloten mindestens einem Empfänger bekannt ist, der dazu bestimmt ist, einen Empfang des Signals durchzuführen, und andererseits informative Datenelemente enthalten, wobei der sendeseitige Wert der informativen Datenelemente dem oder den Empfänger(n) vorab nicht bekannt ist, wobei eine der Trägerfrequenzen, die zu einem gegebenen Zeitpunkt von einem der Datenelemente moduliert wird, Träger genannt wird,

wobei das empfangene Signal eine Gruppe von mindestens zwei zu schützenden Datenelementen enthält, wobei die zu schützenden Datenelemente paarweise einen Abstand von höchstens einem Träger im Zeitbereich und höchstens einem Träger im Frequenzbereich haben, wobei vor dem Senden eine Verarbeitung an dem Signal durchgeführt wird, um mindestens einen Wert mindestens einem Datenelement eines Konturkranzes zuzuweisen, der aus den Trägern besteht, die den zu schützenden Datenelementen direkt benachbart sind, um eine die zu schützenden Datenelemente betreffende Interferenz zu reduzieren,

wobei das Verfahren ausführt:

- einen Schritt des Schätzens der Transferfunktion eines Übertragungskanals ausgehend von mindestens bestimmten der zu schützenden Datenelemente; und
- einen Schritt des Wiedergewinnens der Datenelemente des Konturkranzes, der eine Verarbeitung umgekehrt zu der vor dem Senden durchgeführten Verarbeitung ausführt.

8. Vorrichtung zum Senden eines Mehrträgersignals, das von einer zeitlichen Folge von Symbolen gebildet wird, die aus einer Gruppe von Datenelementen bestehen, wobei jedes der Datenelemente eine Trägerfrequenz des Signals moduliert, wobei die Datenelemente einerseits Piloten genannte Bezugs-Datenelemente enthalten, wobei der sendeseitige Wert mindestens bestimmter der Piloten mindestens einem Empfänger bekannt ist, der dazu bestimmt ist, einen Empfang des Signals durchzuführen, und andererseits informative Datenelemente enthalten, wobei der sendeseitige Wert der informativen Datenelemente dem oder den Empfänger(n) vorab nicht bekannt ist, wobei eine der Trägerfrequenzen, die zu einem gegebenen Zeitpunkt von einem der Datenelemente moduliert wird, Träger genannt wird,

wobei die Vorrichtung enthält:

- Einrichtungen zum Berechnen einer Interferenz, die eine Gruppe von mindestens zwei zu schützenden Datenelementen betrifft, wobei die zu schützenden Datenelemente paarweise einen Abstand von höchstens einem Träger im Zeitbereich und höchstens einem Träger im Frequenzbereich haben, wobei die Interferenz den Wert der zu schützenden Datenelemente und die Werte der Datenelemente eines Konturkranzes berücksichtigt, der aus den Trägern besteht, die den zu schützenden Datenelementen direkt benachbart sind; und
- Einrichtungen zur Bestimmung mindestens eines Werts, der mindestens einem Datenelement des Konturkranzes zuzuweisen ist, um empfangsseitig die berechnete Interferenz zu reduzieren.

9. Vorrichtung zum Empfang eines Mehrträgersignals, das von einer zeitlichen Folge von Symbolen gebildet wird, die aus einer Gruppe von Datenelementen bestehen, wobei jedes der Datenelemente eine Trägerfrequenz des Signals moduliert, wobei die Datenelemente einerseits Piloten genannte Bezugs-Datenelemente enthalten, wobei der sendeseitige Wert mindestens bestimmter der Piloten mindestens einem Empfänger bekannt ist, der dazu bestimmt ist, einen Empfang des Signals durchzuführen, und andererseits informative Datenelemente enthalten, wobei der sendeseitige Wert der informativen Datenelemente dem oder den Empfänger(n) vorab nicht bekannt ist, wobei eine der Trägerfrequenzen, die zu einem gegebenen Zeitpunkt von einem der Datenelemente moduliert wird, Träger genannt wird,

wobei das empfangene Signal eine Gruppe von mindestens zwei zu schützenden Datenelementen enthält, wobei die zu schützenden Datenelemente paarweise einen Abstand von höchstens einem Träger im Zeitbereich und höchstens einem Träger im Frequenzbereich haben, wobei vor dem Senden eine Verarbeitung an dem Signal durchgeführt wird, um mindestens einen Wert mindestens einem Datenelement eines Konturkranzes zuzuweisen, der aus den Trägern besteht, die den zu schützenden Datenelementen direkt benachbart sind, um eine die zu schützenden Datenelemente betreffende Interferenz zu reduzieren,

wobei die Vorrichtung enthält:

- Einrichtungen zum Schätzen der Transferfunktion eines Übertragungskanals ausgehend von mindestens bestimmten der zu schützenden Datenelemente; und
- Einrichtungen zum Wiedergewinnen der Datenelemente des Konturkranzes, die eine Verarbeitung umgekehrt zu der vor dem Senden durchgeführten Verarbeitung ausführen.

10. Computerprogrammprodukt, das von einem Kommunikationsnetz heruntergeladen und/oder auf einem computerlesbaren Träger gespeichert und/oder von einem Mikroprozessor ausgeführt werden kann, wobei das Programm Codeprogramm-Anweisungen für die Ausführung mindestens eines der Ansprüche 1 bis 5 enthält.

11. Computerprogrammprodukt, das von einem Kommunikationsnetz heruntergeladen und/oder auf einem computerlesbaren Träger gespeichert und/oder von einem Mikroprozessor ausgeführt werden kann, wobei das Programm Codeprogramm-Anweisungen für die Ausführung des Anspruchs 7 enthält.

Fig. 1

Fig. 2A

Fig. 2B

Fig. 3A

Fig. 3B

Fig. 4

Fig. 5

Fig. 6

Fig. 7

**EP 1 941 547 B1**

**RÉFÉRENCES CITÉES DANS LA DESCRIPTION**

**Documents brevets cités dans la description**

- FR 2733869
- FR 2814302